# EUROPEAN PATENT APPLICATION

(11) **EP 4 481 913 A1**
(43) Date of publication of application: **25.12.2024**
(21) Application number: 23180283.6
(22) Date of filing: 20.06.2023
(51) Int. Cl.: H01M 50/202, H01M 50/213, H01M 50/231, H01M 50/264, H01M 50/282, H01M 50/289, H01M 50/48

(54) **ELECTRONICS ASSEMBLY HAVING ELECTROCHEMICALLY DEBONDABLE COMPONENTS**

(71) Applicant: Henkel AG & Co. KGaA, 40589 Düsseldorf (DE)
(72) Inventor: Franken, Uwe, 41542 Dormagen (DE); Fleck-Kunde, Tom, 40225 Düsseldorf (DE); Buga, Duygu, 41564 Kaarst (DE); Stapf, Stefanie, 45239 Essen (DE); Kamm, Thomas, 51371 Leverkusen (DE)

(57) **Abstract**

The present disclosure is directed to an electronics assembly comprising:
a housing having walls which define an enclosure having at least one floored chamber, wherein at least one wall of the housing is provided with an electrically conductive surface which faces into a chamber;
n electronic components disposed in the enclosure, wherein n is an integer of at least 2 and wherein at least a fraction of said electronic components are provided with an electrically conductive exterior surface; and,
an adhesive by which said electrically conductive exterior surface of said fraction of electronic components is adhered to said electrically conductive surface of wall,
wherein the electronics assembly is characterized in that said adhesive is obtained by curing a curable electrochemically debondable adhesive composition comprising: a non-polymerizable electrolyte; a rheology control agent; and, a matrix resin.

## Description

### FIELD OF THE INVENTION

The present disclosure is directed to an electronics assembly in which electronic components are adhesively bonded to the housing which encloses them. More particularly, the present disclosure is directed to the use of an electrochemically debondable adhesive within such an assembly which enables at least a fraction of the enclosed electronic components to be removed upon the application of voltage within the assembly.

### BACKGROUND TO THE INVENTION

The enclosure of an assembly of electronic components is oftentimes essential to the manufacture of electronic devices and systems. Enclosures provide a secure and reliable way to store and protect electronic components from dust, moisture, and other environmental factors. Enclosures can limit or prevent damage to electronic components caused by impacts and can serve to distribute mechanical stresses. The enclosures may furthermore help to mitigate noise level, heat dissipation and electromagnetic interference (EMI), said interference being defined as unwanted noise or interference in an electrical path or circuit caused by an outside source.

Concomitantly with achieving these functions, it would be beneficial for enclosures to enable facile access to the constituent electronic components of the assembly for the purposes of inspection, maintenance, repair and replacement thereof. Problematically, in certain circumstances, it is necessary to adhere electronic components within enclosures in order to fix their relative position within the assembly and / or to provide structural support to those electronic components. Where structural adhesives are applied to fix electronic components, it is oftentimes impossible to extract those specific components from the enclosure for repair and replacement: consequently the entire enclosed assembly of electronic components must be processed by removing the assembly *in toto* from the device, structure or system in which it is integrated. In lieu of repairing such an extracted assembly, it is not uncommon for the entire assembly to be discarded and replaced.

The present disclosure seeks to obviate the need for - and the associated waste stream of - such "*whole assembly*" processing. It seeks to provide a means by which specific electronic components or a specific sub-group of electronic components can be independently removed from a housed assembly of such components to enable the inspection, maintenance, repair or replacement of those specific components or that sub-group.

One important but non-limiting utility of the present disclosure is for battery assemblies which are used to supply energy to an electrical consumer and, in particular, for battery assemblies which in whole or in part provide the electric power source for electric vehicles. Such assemblies typically include a dense arrangement of a large number of individual battery cells; such cells are clustered into battery modules and the overall assembly will comprise a cluster of such modules disposed in a housing. The composition and performance of the battery assembly can depend *inter alia* on: the characteristics of the individual battery cells; the total number of incorporated cells; the configuration of the battery modules; and, the configuration of the ancillary electronic components present in the housed assembly.

WO2021008826A1 (Marquardt GmbH) describes a battery system for a vehicle, such as a motor vehicle, a pedelec, an e-bike, an electric scooter or an LEV (Light Electric Vehicle), said battery system comprising: a housing having a wall; and, a multiplicity of battery and/or accumulator cells located in the housing.

WO/2018/134704 (Tesla Inc.) describes an energy storage system comprising: a module housing; a plurality of battery cells positioned inside the module housing, each of the plurality of battery cells including a first end and a second end, each of the plurality of battery cells further including a positive terminal and a negative terminal; a first interconnect positioned over the plurality of battery cells; a second interconnect positioned over the plurality of battery cells; a plurality of first cell connectors connecting the positive terminals of the battery cells to the first interconnect; a plurality of second cell connectors connecting the negative terminals of the battery cells to the second interconnect; and, a top plate comprising an interior side and an exterior side and positioned over the first interconnect and the second interconnect, wherein the top plate includes one or more weak areas positioned above one or more battery cell.

Heretofore, where failure at the cell-level or module-level of the battery assembly occurs, it has been necessary to remove the entire housed assembly from the vehicle for inspection, maintenance, repair or replacement. The battery assembly evidently represents one of the largest costs in the purchase of an electric vehicle and any replacement thereof is expensive: indeed the economic and environmental costs of batteries and battery replacement are often cited as key inhibitors to the growth of the electric vehicle market. It would therefore be advantageous if such a cell-level or modular-level failure within a battery assembly could be resolved by the removal and replacement of those specific cells or modules rather than of the assembly itself.

### STATEMENT OF THE INVENTION

In accordance with a first aspect of the disclosure, there is provided an electronics assembly comprising:
a housing having walls which define an enclosure having at least one floored chamber, wherein at least one wall of the housing is provided with an electrically conductive surface which faces into a chamber;
n electronic components disposed in the enclosure, wherein n is an integer of at least 2 and wherein at least a fraction of said electronic components are provided with an electrically conductive exterior surface; and,
an adhesive by which said electrically conductive exterior surface of said fraction of electronic components is adhered to said electrically conductive surface of wall,
wherein the electronics assembly is characterized in that said adhesive is obtained by curing a curable electrochemically debondable adhesive composition comprising:
   a non-polymerizable electrolyte;
   a rheology control agent; and,
   a matrix resin.

The assembly may have the capacity to hold a multiplicity of electronic components: in certain embodiments integer n may be from 2 to 5000, for example from 10 to 5000, from 100 to 5000 or from 100 to 2000.

The housing may comprise: a cover, a base and a peripheral wall which together define the enclosure; and, at least one dividing wall and preferably at least two dividing walls by which said enclosure is divided into discrete floored chambers. An assembly having such dividing walls may have particular utility in the containment of battery cells. Thus, in an important embodiment, there is provided a battery assembly comprising:
a housing having:
   a cover, a base and a peripheral wall which together define the enclosure; and,
   at least two dividing walls which divide the housing into parallel discrete floored chambers;
   wherein at least one wall selected from said peripheral wall and said dividing walls is provided with an electrically conductive surface which faces into a chamber;
n cylindrical battery cells disposed in the enclosure, wherein n is an integer of from 100 to 5000 and wherein a fraction of said battery cells are provided with an electrically conductive exterior surface; and,
an adhesive by which said electrically conductive exterior surface of said first fraction of cells is adhered to said electrically conductive surface of said wall,
wherein the battery assembly is characterized in that said adhesive is obtained by curing a first curable electrochemically debondable adhesive composition comprising:
   a non-polymerizable electrolyte;
   a rheology control agent; and,
   a matrix resin.

In certain embodiments, said at least one wall has a laminar structure comprising: an integrant of electrically non-conductive material having an outer surface and an inner surface with respect to said chamber; an electrically conductive film (CF) disposed on the inner surface of said integrant of electrically non-conductive material, the electrically conductive film (CF) providing said electrically conductive surface which faces into the chamber. In certain circumstances, a fixative film may be disposed between said integrant of electrically non-conductive material and said electrically conductive film (CF). Where such a fixative film is present, it is preferred that the wall further comprises at least one spacer which is disposed between said layer of electrically non-conductive material and said electrically conductive film (CF), wherein said at least one spacer either interrupts the fixative film or is disposed at an end thereof.

In an alternative embodiment, which is not intended to be mutually exclusive of that given above, the assembly comprises at least one electronic component having a laminar shell comprising: a integrant of electrically non-conductive material having an outer surface; an electrically conductive film (CF) disposed on the outer surface of said integrant of electrically non-conductive material, the electrically conductive film (CF) providing said electrically conductive exterior surface of the electronic component. In certain circumstances, a fixative film may be disposed between said integrant of electrically non-conductive material and said electrically conductive film. Where such a fixative film is present, it is preferred that the laminar shell further comprises at least one spacer which is disposed between said layer of electrically non-conductive material and said electrically conductive film, wherein said at least one spacer either interrupts the fixative film or is disposed at an end thereof.

In certain embodiments, said matrix resin of the curable, electrochemically debondable adhesive composition is selected from the group consisting of: epoxy resins; acrylic resins; polyurethane resins; acrylic-epoxy hybrid epoxy resins; and, polyurethane-epoxy hybrid resins.

Good results have been obtained where said curable electrically debondable adhesive compositions is a two-part (2K) adhesive composition comprising, based on the weight of the composition:
a first part comprising:
   from 2 to 25 wt.%, preferably 5 to 20 wt.% of non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts; and,
   from 0 to 15 wt.%, preferably from 1.5 to 10 wt.%, of solubilizer, wherein said solubilizer comprises a polyoxy(C₂-C₃)alkylene glycol having a weight average molecular weight of from 200 to 10000 g/mol, for example 200 to 2000 g/mol; and,
   from 30 to 70 wt.%, preferably 35 to 60 wt.% of at least one epoxide compound;
a second part comprising:
   a curing agent consisting of at least one compound possessing at least two epoxide reactive groups per molecule, wherein said curing agent comprises at least one polyamine having at least two amine hydrogens reactive toward epoxide groups, said polyamine being further characterized by containing primary and / or secondary amine groups and having an equivalent weight per primary or secondary amine group of not more than 150 g/eq; and,
   from 0 to 15 wt.%, preferably 0.1 to 10 wt.% of accelerator, wherein said accelerator is selected from the group consisting of tertiary amines, quaternary ammonium salts, amidines, guanidines and mixtures thereof,
wherein said composition is further characterized
by comprising from 1 to 50 wt.%, preferably from 2 to 25%, of rheology control agent; and,
by a molar ratio of epoxide-reactive groups to epoxide groups of from 0.75: 1 to 1.1: 1.

In accordance with a further aspect of the disclosure, there is provided a vehicle comprising an electronics assembly as defined herein above and in the appended claims.

In a still further aspect of the present disclosure, there is provided a method of disbonding the electronics assembly as defined herein above and in the appended claims, the method comprising the steps of:
i) applying a voltage across both said electrically conductive exterior surface of said fraction of electronic components and said electrically conductive surface of said wall to form an anodic interface and a cathodic interface; and,
ii) disbonding the surfaces.

Typically, the voltage applied in step i) is from 0.5 to 100 V and it is preferably applied for a duration of from 1 second to 60 minutes.

The disclosure further provides a bonded structure comprising:
an electronic component provided with an electrically conductive exterior surface;
a frame provided with an electrically conductive surface; and,
an adhesive by which said electrically conductive exterior surface of said electronic components is adhered to said electrically conductive surface of the frame,
wherein the frame has a laminar structure comprising:
   an integrant of an electrically non-conductive material;
   an electrically conductive film (CF) disposed on a surface of said integrant, the electrically conductive film providing said electrically conductive surface of the frame; and,
   a fixative film disposed between said integrant and said electrically conductive film;
wherein said adhesive is obtained by curing a curable electrochemically debondable adhesive composition comprising:
   a non-polymerizable electrolyte;
   a rheology control agent; and,
   a matrix resin.

In certain circumstances, a fixative film may be disposed between said integrant of electrically non-conductive material and said electrically conductive film (CF). Where such a fixative film is present, it is preferred that the frame further comprises at least one spacer which is disposed between said integrant of electrically non-conductive material and said electrically conductive film (CF), wherein said at least one spacer either interrupts the fixative film or is disposed at an end thereof.

In a still further aspect of the present disclosure, there is provided a method of disbonding the bonded structure as defined herein above and in the appended claims, the method comprising the steps of:
i) applying a voltage across both said electrically conductive exterior surface of said electronic component and said electrically conductive surface of said frame to form an anodic interface and a cathodic interface; and,
ii) disbonding the surfaces.

Typically, the voltage applied in step i) is from 0.5 to 100 V and it is preferably applied for a duration of from 1 second to 60 minutes.

The adhesive property of the composition is disrupted by the application of an electrical potential across the bondline between that composition and the conductive surfaces. Without intention to be bound by theory, it is considered that the faradaic reactions which takes place at the interface between the adhesive composition and the conductive surfaces disrupt the interaction between the adhesive and the substrate, thereby weakening the bond therebetween. That interfacial disruption may be the consequence of one or more processes, for instance chemical degradation of the debondable material, gas evolution at the interface and / or material embrittlement though changes to the crosslink density of the adhesive composition.

When the adhesive is disrupted by the application of an electrical potential across the bondline, the relevant fraction of the electronic components may be removed from the overall assembly. Having regard to a battery assembly, for instance, the relevant fraction may be constituted by individual battery cells, a grouping of battery cells, a fraction of a module of such cells, a module of such cells or a grouping of such modules.

### DEFINITIONS

As used herein, the singular forms "a", "*an*" and "*the*" include plural referents unless the context clearly dictates otherwise.

The terms "*comprising*", "*comprises*" and "*comprised* of" as used herein are synonymous with "*including*", "*includes*", "*containing*" or "*contains*", and are inclusive or open-ended and do not exclude additional, non-recited members, elements or method steps.

As used herein, the term "*consisting of*" excludes any element, ingredient, member or method step not specified. For completeness, the term "*comprising*" encompasses "*consisting of*"*.*

The words *"*p*referred"*, *"preferably", "desirably"* and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "*exemplary*" is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

Spatially relative terms, such as "*upper*", "*lower*", "*top*", "*back*", "*above*", "*below*", *"left",* "*right*" and the like may be applicable herein to describe an component's relationship to another component(s) as illustrated in the figures. Obviously all such spatially relative terms refer to the orientation shown in the figures only for ease of illustration and are not necessarily limiting given that an assembly can assume orientations and configurations different from those illustrated in the figures when in use.

The term "*plurality*" as used herein is defined as two or more than two.

The term "*at least a fraction*" is used herein in the context of representing an integer amount of electronic components and specifically encompasses 100% of the defined electronic components. Subject to the caveat that the fraction must represent an integer, the term "*at least a fraction*" includes: at least 5%; at least 10%; at least 15%; at least 20%; at least 25%; at least 30%; at least 35%; at least 40%; at least 45%; at least 50%; at least 55%; at least 60%; at least 65%; at least 70%; at least 75%; at least 80%; at least 85%; at least 90%; at least 95%; or, 100% of the defined electronic components.

The term "*fraction*" *per se* refers to a numerical quantity which defines a part up to but not including 100 percent or the entirety of the thing in question. In the context electronic components in the assembly of the present disclosure, said fraction must be an integer amount.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to* x" specifically includes 0 wt.%: the ingredient or part - a) or b) herein, for example - defined by said range may be absent from the material or may be present in the material in an amount up to x wt.%.

The molecular weights referred to in this specification can be measured with gel permeation chromatography (GPC) using polystyrene calibration standards, such as is done according to ASTM 3536.

As used herein, the term softening point (°C.) used in regard to waxes herein is the Ring & Ball softening point, which is measured unless otherwise indicated according to ASTM E28.

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

Shore A hardness may be determined by pressing a hand-held durometer - such as Zwick 3130 - onto a sample (≥ 6 mm thickness; 3 seconds contact time before measurement) in accordance with DIN ISO 7619-1.

As used herein, room temperature is 23°C plus or minus 2°C.

As used herein, "*ambient conditions*" means the temperature and pressure of the surroundings in which the composition is located or in which a coating layer or the substrate of said coating layer is located.

An "*integrant*" of a wall, of a frame or of another entity refers herein to a designated region thereof which is selected for the bonding of an adherend thereto. Whilst it is not precluded that the integrant may be disposed at the edge or corner of a wall, frame or other entity, the integrant will more typically be a planer region of said wall, frame or entity. The integrant should possess structural integrity and thereby have the ability to bear lead, including its own weight, whilst resisting breakage, bending or collapse.

The term "*electronic component*" denotes any component, member or apparatus which fulfils any electric, magnetic and/or electronic functionality. This means that electric, magnetic and/or electromagnetic signals may be applied to and/or generated by the electronic component during regular use. Exemplary electronic components include but are not limited to: batteries; battery cells; (micro)processors; signal processors; displays; capacitors; resistors; transistors; medical application devices, such as a glucose delivery device or an automatic defibrillator; global positioning system (GPS) receivers; sensors, such as biometric sensors, temperature sensors, moisture sensors, velocity sensors and accelerometers; and, antennas. The present disclosure has particular utility for the housing or framing of battery cells.

It will be understood that the term "*vehicle*" as used herein shall be construed broadly to include any means of motorized conveyance, such as automobiles, motorcycles, trucks, water craft, aircraft, trailers and off-road vehicles. The term encompasses autonomous and autonomous vehicles and, independently of that designation also encompasses electric vehicles. The term "*autonomous vehicle*" refers to a vehicle that operates in an autonomous mode and thereby may navigate and / or maneuver along a travel route using one or more computing systems to control the vehicle with little or no input from a human operator. A "*semi-autonomous vehicle*" is vehicle of which the control of some motive functions is effected without direct operator input. For example, a semi-autonomous vehicle may be one which is capable of receiving remote instructions from an operator in certain situations, such as when the vehicle can no longer operate autonomously for some reason. A semi-autonomous vehicle may permit selection of different levels of autonomy.

The term "*cylindrical*" as used herein means a three-dimensional object that is obtained by taking a circular two-dimensional area and projecting it in one direction so that the resulting three-dimensional object has the same cross-sectional size and circular shape at any location along its length.

The term "*composite*" is used herein to denote a continuous matrix of polymeric resin having disposed therein a particulate filler. The particulate filler, such as but not limited to fibers, provide a reinforcement to the polymeric resin. Exemplary polymeric resins from which the matrix may be formed - and which may be used alone or in combination - include but are not limited to: polycarbonate; polystyrene; acrylonitrile butadiene styrene copolymers (ABS); styrene acryloniitrile copolymers (SAN); styrene butadiene styrene copolymers; styrene ethylene propylene styrene copolymers; polyvinyl chloride; polyvinylidene fluoride (PVDF); polyolefins, such as polypropylene, polyethylene, and polybutylene; polyamide; polyimide; polyamideimide; polyether imide; polyethylene terephthalate; polybutylene terephthalate; polyethylene naphthalate; polymethyl methacrylate; ethylene butyl acrylate copolymers; polyacrylonitrile; polyetherketone; polyarylketone; polyethersulfone (PES); polyarylsulfone; polysulfone; polyphenylene sulfide; polyurethane; polyurea; polybenzoxazole; polyoxadiazol; polybenzothiazole; polybenzimidazole; polypyridine resin; polytriazole; polypyrrolidone; polydibenzofuran resin; and, polyphosphazene.

As used herein, the term "*electrochemically debondable*" means that, after curing of the adhesive, the bond strength can be weakened by at least 50% upon application of an electrical potential of 1V for a duration of 60 minutes. The cured adhesive is applied between two substrates which are bonded by said adhesive so that an electric current is running through the adhesive bond line. Bond strength is measured by Tensile Lap Shear (TLS) test performed at room temperature and based upon ASTM D3163-01 *Standard Test Method for Determining Strength of Adhesively Bonded Rigid Plastic Lap-Shear Joints in Shear by Tension Loading.* The bond overlapping area was 2.5 cm x 2.5 cm (1" x 1") with a bond thickness of 0.1 cm (40 mil).

As used herein, the term "*monomer*" refers to a substance that can undergo a polymerization reaction to contribute constitutional units to the chemical structure of a polymer. The term "*monofunctional*"*,* as used herein, refers to the possession of one polymerizable moiety. The term "*polyfunctional*", as used herein, refers to the possession of more than one polymerizable moiety.

As used herein, the term "*equivalent (eq.")* relates, as is usual in chemical notation, to the relative number of reactive groups present in the reaction.

The term "*electrolyte*" is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable adhesive compositions of the present disclosure and the cured adhesives obtained therefrom possess "*electrolyte functionality*" in that the adhesive material permits the conduction of ions, either anions, cations or both. The electrolyte functionality is understood to derive from the ability of the compositions and cured adhesives to solvate ions of at least one polarity.

The term "*faradaic reaction*" means an electrochemical reaction in which a material is oxidized or reduced.

*"Two-part (2K) compositions"* in the context of the present disclosure are understood to be compositions in which a first part (A) and a second part (B) must be stored in separate vessels because of their (high) reactivity. The two parts are mixed only shortly before application and then react, typically without additional activation, with bond formation and thereby formation of a polymeric network. Herein higher temperatures may be applied in order to accelerate the cross-linking reaction.

As used herein, "*(meth)acryl*" is a shorthand term referring to "*acryl*" and/or "*methacryl*"*.* Thus the term *"(meth)acrylamide"* refers collectively to acrylamide and methacrylamide.

As used herein, "*C₁*-*Cₙ alkyl*" group refers to a monovalent group that contains 1 to n carbons atoms, that is a radical of an alkane and includes straight-chain and branched organic groups. As such, a "*C₁*-*C₃₀ alkyl"* group refers to a monovalent group that contains from 1 to 30 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. Where applicable, a preference for a given substituent will be noted in the specification. In general, however, a preference for alkyl groups containing from 1-18 carbon atoms (C₁-C₁₈ alkyl) - for example alkyl groups containing from 1 to 12 carbon atoms (C₁-C₁₂ alkyl) or from 1 to 6 carbon atoms (C₁-C₆ alkyl) - should be noted.

The term *"C₁-C₁₈hydroxyalkyl"* as used herein refers to a HO-(alkyl) group having from 1 to 18 carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term "*C₁-C₁₈ alkoxyalkyl*" as used herein refers to an alkyl group having an alkoxy substituent as defined above and wherein the moiety (*alkyl-O-alkyl*) comprises in total from 1 to 18 carbon atoms: such groups include methoxymethyl (-CH₂OCH₃), 2-methoxyethyl (-CH₂CH₂OCH₃) and 2-ethoxyethyl.

The term "*C₂-C₄ alkylene"* as used herein, is defined as saturated, divalent hydrocarbon radical having from 2 to 4 carbon atoms.

The term "*C₃ -C₃₀ cycloalkyl*" is understood to mean an optionally substituted, saturated, mono-, bi- or tricyclic hydrocarbon group having from 3 to 30 carbon atoms. In general, a preference for cycloalkyl groups containing from 3-18 carbon atoms (C₃-C₁₈ cycloalkyl groups) should be noted. Examples of cycloalkyl groups include: cyclopropyl; cyclobutyl; cyclopentyl; cyclohexyl; cycloheptyl; cyclooctyl; adamantane; and, norbornane.

As used herein, an "*C₆-C₁₈ aryl*" group used alone or as part of a larger moiety - as in *"aralkyl group"*
- refers to optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*C₂-C₂₀ alkenyl*" refers to hydrocarbyl groups having from 2 to 20 carbon atoms and at least one unit of ethylenic unsaturation. The alkenyl group can be straight chained, branched or cyclic and may optionally be substituted. The term *"alkenyl"* also encompasses radicals having *"cis"* and *"trans"* configurations, or alternatively, "*E*" and "*Z*" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂-C₁₂ alkenyl groups include, but are not limited to: -CH=CH₂; -CH=CHCH₃; -CH₂CH=CH₂; -C(=CH₂)(CH₃); -CH=CHCH₂CH₃; -CH₂CH=CHCH₃; -CH₂CH₂CH=CH₂; -CH=C(CH₃)₂; -CH₂C(=CH₂)(CH₃); -C(=CH₂)CH₂CH₃; -C(CH₃)=CHCH₃; -C(CH₃)CH=CH₂; -CH=CHCH₂CH₂CH₃; - CH₂CH=CHCH₂CH_{3;} -CH₂CH₂CH=CHCH₃; -CH₂CH₂CH₂CH=CH₂; -C(=CH₂)CH₂CH₂CH₃; - C(CH₃)=CHCH₂CH₃; -CH(CH₃)CH=CHCH; -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, "*alkylaryl"* refers to alkyl-substituted aryl groups and *"substituted alkylaryl"* refers to alkylaryl groups further bearing one or more substituents as set forth above. Further, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The term *"equivalent weight'* as used herein refers to the molecular weight divided by the number of a function concerned. As such, *"epoxy equivalent weight*" (EEW) means the weight of resin, in grams, that contains one equivalent of epoxy.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups. The epoxide may be unsubstituted but may also be inertly substituted. Exemplary inert substituents include chlorine, bromine, fluorine and phenyl.

The term "*latent*" as used herein is meant to refer to an inert functional group which can be selectively converted to a reactive functional group at the appropriate point in the synthetic sequence: the triggering event for this conversion may be *inter alia* moisture, heat or irradiation.

The term *"accelerator"* as used herein refers to a chemical agent that is co-reactive with the curative and which reduces the cure time of the composition relative to that achievable with said curative alone under equivalent conditions.

The term *"photoinitiator"* as used herein denotes a compound which can be activated by an energy-carrying activation beam - such as electromagnetic radiation - for instance upon irradiation therewith.

### DETAILED DESCRIPTION OF THE INVENTION

The present invention will be described with reference to the appended drawings in which:
Fig. 1a depicts a closed housing in accordance with an embodiment of the present disclosure;
Fig. 1b is an exploded view of the housing of Fig. 1a;
Fig. 2 depicts a cylindrical battery cell for utilization in an array of such battery cells in accordance with an embodiment of the present disclosure;
Fig. 3a is a depiction solely of the base of a housing in accordance with an embodiment of the present disclosure;
Fig. 3b is a section view taken along the line A-A' of Figure 3a;
Fig. 4a depicts a bonded structure in accordance with a first embodiment of the present disclosure;
Fig. 4b depicts a bonded structure in accordance with a second embodiment of the present disclosure;
Fig. 5a depicts the initial debonding of the structure of the first embodiment upon passage of a current across that structure;
Fig. 5b depicts the initial debonding of the structure of the second embodiment upon passage of a current across that structure;
Figs. 6a-6c depict the formation of a bonded structure in accordance with a third embodiment of the present disclosure; and,
Fig. 6d depicts the initial debonding of the structure of the third embodiment upon passage of a current across that structure.

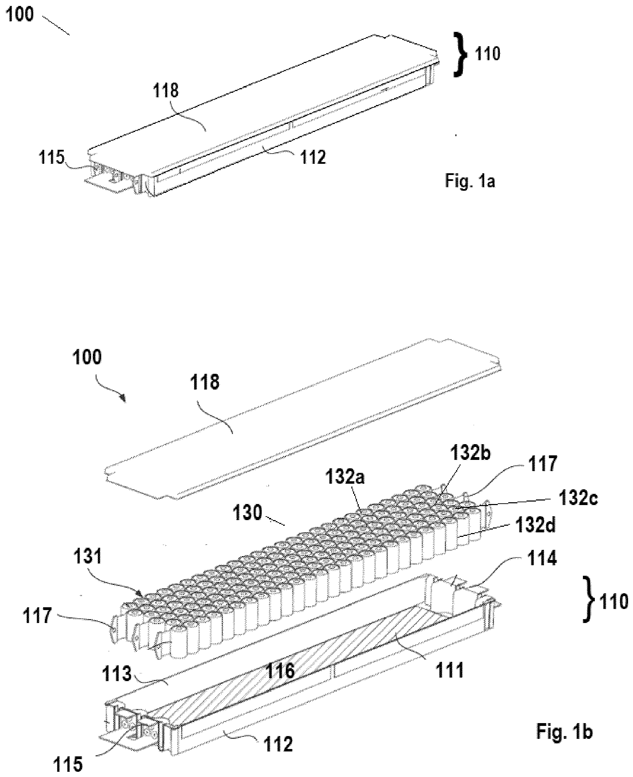

Figures 1 to 3 have been described herein below with respect to a battery assembly. This is not intended to be limiting but merely illustrative. In the Figures provided, battery cells (131) may be wholly or partially replaced by other electronic components.

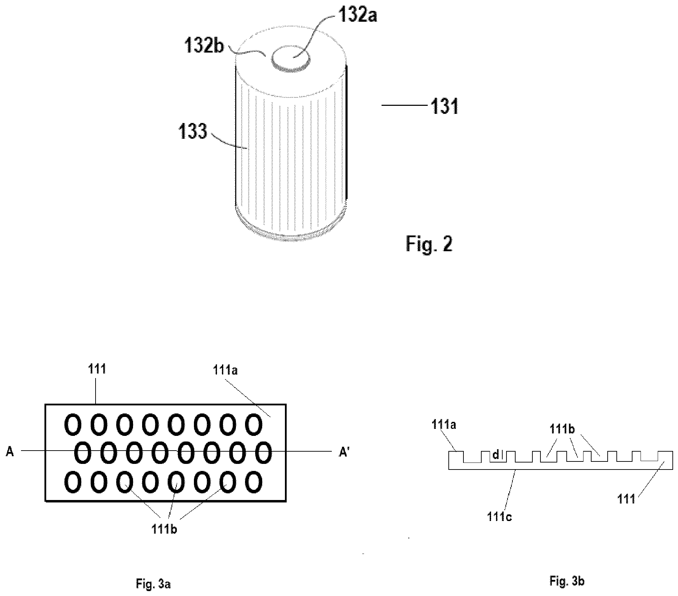

Having regard to Figures 1a and 1b, there is provided an illustrative battery assembly (100) of which the housing (110) encloses an array (130) of battery cells. Whilst the assembly is substantially rectangular in cross-section, it will be recognized that the assembly (100) may have other cross-sectional shapes: this may include custom shapes which are uniquely configured to be integrated within a broader structure, such as a vehicle and in particular an electric vehicle. Furthermore, the bottom surface (111c, Fig. 3b) of the base (111) of the assembly (100) may equally be formed so as to provide the desired mounting within that broader structure. And one skilled in the art will appreciate that the dimensions of the assembly (100) may be determined by the number (n) of battery cells (131) to be housed and the geometric shape of the cells.

For completeness, it is noted that the depicted assembly (100) might not be integrated directly into a broader structure, such as an electric vehicle. The assembly may, for example, be provided with an encasement, frame or other supporting arrangement *(not shown)* in order to mitigate compressive, tensile, torsional, shear, or bending stresses imposed by components or loads from the structure.

The housing (110) comprises four peripheral walls (112,113,114,115) which are vertically oriented and respectively present surfaces which face the enclosure (116) of the housing. At least one of the surfaces should be receptive to adhesive to secure the battery cells (131) which are to be contained in the enclosure. In particular, the two major peripheral walls (112,113) in the depicted configuration should each have inner surfaces which are receptive to adhesive.

Whilst this has not been illustrated, the peripheral walls (112,113,114,115) may include apertures or ports for electrical or thermal instrumentation and, in certain circumstances, hydraulic interfaces. In particular, opposite minor peripheral walls (114,115) in the depicted rectangular configuration of the housing (110) may include features which position or constrain functional electronic components: for instance, the peripheral walls may include features for electrical terminal bus bar retention or, respectively, positive or negative terminal connectors for an energy storage system.

The individual battery cells (131) of the array are sized so as to form a substantially horizontal plane based on the alignment of their upper surfaces. The peripheral walls (112,113,114,115) of the housing should be sized to also present a horizontal plane which is disposed a small interval above that of the individual battery cells (131).

As noted, the assembly (100) includes a battery cell array (130). Herein the battery cells are depicted as being cylindrical but it will be appreciated that other cell shapes, such as rectangular, may be utilized. Moreover, whilst the array is depicted as consisting of one battery cell type, an array may incorporate different shaped cells in certain embodiments.

The battery array (130) is arranged as four modules (132a-d) which are each constituted by groupings of cells having a common orientation and which modules are separated from one another by dividing walls (117). In the closed configuration, the dividing walls (117) partition the enclosure (116) into discrete chambers which each contain a battery module. Said dividing walls (117) are depicted herein as being rectilinear but may have other configurations, such as being undulate, for instance. Within each module supported on a floored chamber, the battery cells may be placed in direct contact so as to provide maximum packing density. It will however be appreciated that battery cells in a given module may be intentionally spaced apart in certain embodiments

The positive (132a) and negative (132b) terminals for individual battery cells (131) are aligned in a common planar direction relative to the array (130). With reference to Figure 2, each individual cell may include a positive terminal (132a) and a negative terminal (132b) on the top surface of the battery cell (131) such that both terminal surfaces are on a substantially similar horizontal plane. This common planar direction facilitates primary and secondary electrical interconnects along a common plane required for power delivery and series voltage sensing within the assembly (100).

A dielectric sleeving (133) is applied to the outer surface of individual battery cells (131) and substantially encompasses the cylindrical side surface of each cell (131). The use of a dielectric cell sleeve permits neighboring electronic components to be made of electrically or thermally conductive materials. Moreover, the use of the sleeve (133) is considered to improve volumetric energy density, reduce internal void volume and thereby promote a balanced diffusion of thermal energy from provoked or unprovoked thermal runaway, thus obviating the risk of a localized thermal event propagating to a module-level or array-level event.

The cell array (130) may be passively or actively cooled on one or more faces via a coolant fluid. In an embodiment, at least one dividing wall (117) of the housing may be provided with cooling means (*not shown*)*.* For instance, a plurality of conduits may be provided in a dividing wall (117), which conduits extend integrally along at least part of the length of the enclosure (116): the conduits are configured to carry a fluid coolant that draws heat away from the battery cells (131) contacting said wall. Alternatively or additionally, a plurality of vents may be provided which extend through a dividing wall (117) and through which a gas may be introduced into the enclosure (116) or a constituent chamber thereof.

The illustrated assembly (100) of Figures 1a and 1b is sealed with a cover (118) which may be integrated with the peripheral walls (112,113,114,115) or may be provided as a separate component. Whilst such a cover can be omitted in certain instances, the inclusion of a cover (118) within the battery assembly can provide: a thermal barrier, which is of importance during thermal runaway of the battery array (130); electrical isolation; a dielectric insulation barrier between the battery cells (131) and other electronic components; and, resistance to topside abuse of the assembly (100). Such a cover will conventionally be comprised of thermoplastic material, electrically insulated metallic materials or composite materials. Further, whilst the cover (118) will conventionally be in the form of a continuous sheet - as illustrated - it is not precluded that the cover (118) may alternatively have a grid or waffle pattern, subject to the proviso that this pattern can provide electrical isolation and does not deleteriously compromise the resistance of the assembly (100) to topside abuse.

In certain embodiments, the cover (118) may be provided with an electrically conductive surface which faces into the enclosure (116) or a constituent chamber thereof. Using a cured electrochemically debondable adhesive, as described hereinbelow, one or more battery cells (131) or even one or more battery modules (132a-d) may be adhered to the cover (118).

The housing (110) of the assembly (100) further comprises a base (111) which in the closed configuration provides the floor of the enclosure (116) and the chambers thereof on which the battery cells (131) are disposed. The base (111) should possess both: mechanical stability so as to exhibit low deformation under load and to distribute forces applied to the battery array; and, high thermal resistance to protect the cell array from high convective heat transfer.

Whilst the base (111) will conventionally be planar, this does not preclude the inner surface (111a) of the base (111) from including retaining features for the battery cells. Figures 3a and 3b provide an illustration of such a retaining feature, wherein the inner surface of the base (111a) is provided with a plurality of wells (111b), wherein each well has a cross-sectional shape which is complimentary to the shape of the battery cell and has a depth (d) which enables a part of the battery cell (131) to be received within the well.

The base (111) of the housing may also be provided with cooling means (*not shown*)*.* For instance, a plurality of conduits may be provided in the base (111) which extend integrally along the length of the enclosure (116): the conduits are configured to carry a fluid coolant that draws heat away from the battery cells (131) supported on the base (111). Alternatively or additionally, a plurality of vents may be provided which extend through the base and through which a gas may be introduced into the enclosure (116) or a given chamber thereof.

As will be discussed herein below, an electrochemically debondable adhesive composition may be applied within the housing. The loci at which such an adhesive composition is determined by the fraction of the constituent cells (131) which are to be de-bonded via the application of a potential difference across the cured adhesive. For instance such loci may be determined according to the intention to de-bond,: individual battery cells from the array; a grouping of battery cells from the array; a part of a module of battery cells; a module of battery cells; or, a modular array of battery cells. Correspondingly, at these loci, the cured adhesive composition will be disposed between two electrically conductive surfaces. The electrically conductive surfaces may be provided: on an exterior surface of at least a fraction of the battery cell(s); on at least one of the peripheral walls (112-115) of the housing (110); when present, on at least one dividing wall (117); and, optionally, when present, on the cover (118). The electrically conductive surfaces provided on a peripheral wall, the dividing wall the cover (118) will face into a floored chamber of the enclosure (116) in the closed configuration of the assembly (100) depicted in Figure 1.

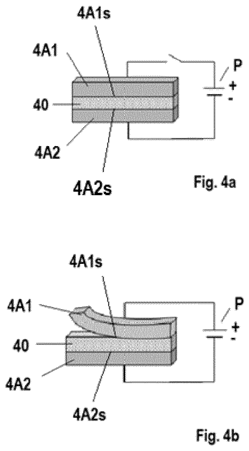

The housing (110) will contain electrical interconnects which enable a voltage to be applied across electrically conductive surfaces provided on the wall(s) and electronic component(s) thereof. The requisite power source (P) to provide this potential difference - as illustrated in Figures 4 to 6 - may be disposed within the housing or external to the housing. The operative control of the circuit (Figs. 4-6) of which the power source (P) is a component may be performed using a suitable switch, which switch may in turn be actuated locally or remotely by an operator.

The term *"provided on"* encompasses the electrically conductive surface being: i) an integral part of the stated wall, cover or electronic component; ii) a conductive layer applied directly to a wall, cover or electronic component where, for example, the material from which the exterior surfaces of the wall, cover or electronic component are constructed do not possess conductivity and where the direct addition of an electrically conductive layer thereon does not compromise the functionality of the wall, wall or electronic component; and, iii) a conductive layer being applied indirectly to a wall, cover or electronic component where, for example, the exterior surfaces of the wall, cover or electronic component do not possess electrical conductivity but where directed application of an electrically conductive layer may be deleterious to the functionality of the wall, cover or electronic component. By way of example and with due regard to Figure 3, the direct provision of a conductive layer to a battery cell (131) which has a dielectric sleeve (133) may not be appropriate in some embodiments.

Figures 4 to 6 appended hereto depict various non-limiting embodiments by which the electrochemically debondable adhesives may be disposed between the electrically conductive surfaces provided on the electronic component - such as the battery cell (131) - and the electrically conductive surface provided on a constituent wall of the housing and, optionally, further provided on a cover (118) of said housing. The electronic component and the integrant of the wall or cover will be referenced hereinafter as the first and second adherends. The integrant of the wall or cover of the housing may constitute either the first or the second adherend; the electronic component will thus constitute the complimentary second or first adherend.

The bonded structures of Figures 4 to 6 are not mutually exclusive with respect to their incorporation into an assembly (100) of the present disclosure. One, two or three of said bonded structure types may be employed in an assembly (100) to debondably adhere electronic components to a wall.

As shown in Figure 4a appended hereto, a bonded structure is provided in which a layer of cured adhesive (40) - as described herein below - is disposed between first (4A1) and second (4A2) adherends which possess electrically conductive surfaces (4A1s, 4A2s).

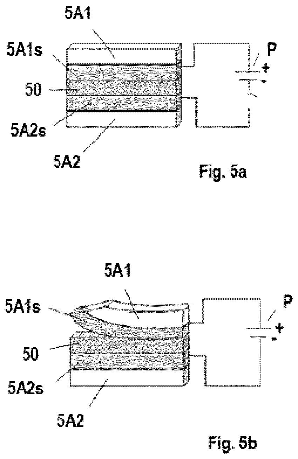

Figure 5a depicts an alternative bonded structure in which electrically conductive surfaces (5A1s, 5A2s) are respectively provided on first (5A1) and second (5A2) adherends, which adherends comprise or consist of electrically non-conductive material. A layer of cured adhesive (50) - as described herein below - is disposed between said first (5A1s) and second (5A2s) conductive surfaces. These surfaces (5A1s, 5A2s) may be constituted by *inter alia:* a metallic film; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and, zinc stannate. The selection of the conductive material aside, the skilled artisan will recognize that the efficacy of the debonding operation may be diminished where the provided conductive layers (5A1s, 5A2s) are in the form of a grid or mesh which offers limited contact with the layer of cured adhesive (50).

The conductive surfaces of Figures 4a and 5a are in electrical contact with an electrical power source (P) which may be a battery or an AC-driven source of direct current (DC). The positive and negative terminals of that power source (P) are shown in one fixed position but the skilled artisan will of course recognize that the polarity of the system can be reversed.

When an electrical voltage is applied between the conductive surfaces, current is supplied to the cured adhesive (40, 50) disposed therebetween. This induces electrochemical reactions at the interface of the conductive surfaces and the adhesive (40, 50), which electrochemical reactions are understood as oxidative at the positively charged or anodic interface and reductive at the negatively charged or cathodic interface. The reactions are considered to weaken the adhesive bond between the adherends allowing the easy removal of the debondable composition from the surface(s).

As depicted in Figures 4b and 5b respectively, the debonding occurs at the positive interface, that interface between the adhesive composition (40, 50) and the conductive surface (4A1s, 5A1s) of the first adherend that is in electrical contact with the positive electrode. By reversing current direction prior to separation of the adherends, the adhesive bond may be weakened at both adherend interfaces.

It is however noted that the composition of the adhesive layer (40, 50) may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / adherend interfaces. In an alternative embodiment, reversed polarity may be used to simultaneously disbond both adherend / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

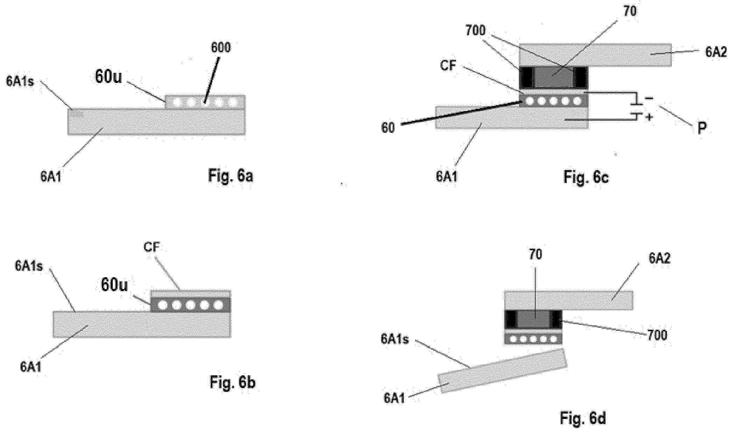

Figures 6a to 6c show the sequential formation of a bonded structure in accordance with a further embodiment of the present disclosure. According to Figure 6a there is provided a first adherend (6A1) possessing an electrically conductive surface (6A1s) on which is applied a layer of curable electrochemically debondable adhesive composition (60u), as described herein. For surety, the designation "u" is applied to a reference numeral to denote an uncured or curable state. A conductive film (CF) is then provided such that the curable adhesive composition (60u) is interposed between that first adherend (6A1) and the conductive film (CF). The conductive film (CF) should desirably be a metallic film having a thickness of from 10 to 100 µm, for instance from 15 to 75 µm. A preference for the use of an aluminium (Al) film as the conductive film (CF) may be noted.

The electrochemically debondable adhesive composition (60u) is depicted as comprising a particulate rheology control agent (600), of which glass beads are an important example. It is noted that said rheology control agent (600) may be provided as an ingredient of the applied curable electrochemically debondable adhesive composition. Alternatively or additionally, the rheology control agent (600) may be added to the curable adhesive composition (60u) after it has been applied to the first adherend (6A1) but prior to curing.

As depicted in Figure 6c, a film of a fixative (70) is then interposed between the conductive film (CF) and the second adherend (6A2). That fixative film (70) should desirably have a thickness of from 200 to 1500 µm. Further, the fixative film (70) should not be electrochemically debondable: save for this condition, the fixative film (70) is not particularly limited but it should be operable or effective in the bonding of metallic substrates. Good results have been obtained where the fixative film (70) is obtained by the curing of a composition selected from: two-part (2K) polyurethane adhesive compositions; two-part (2K) epoxy adhesive compositions; and, thermally conductive adhesive compositions. And illustrative commercial products having utility in forming the fixative film (70) include Teroson EP 5065 and Teroson PU 6700 available from the Henkel Corporation.

For completeness, it is noted that the curable electrochemically debondable adhesive composition (60u) and the composition from which the fixative film is derived (70) may be independently cured to form, respectively, cured adhesive (60, Fig. 6d) and cured fixative film (70). Alternatively, the curable electrochemically debondable adhesive composition (60u) and fixative film (70) may be simultaneously cured where the operable curing conditions for each composition are compatible.

Also interposed between the second adherend (6A2) and the conductive film (CF) are two spacers (700), which will conventionally be detachable from the adherend (6A2) and said film without damaging said elements of the bonded structure. Such spacers (700) are optional and may be absent in certain variants of this embodiment. However, spacers (700) can serve to firmly fix the spatial relationship between the second adherend (6A2) and the conductive film and, in doing so, moderate the effects of vibrations and impacts to which a bonded structure may be subjected. This is particularly germane for structures which are to be disposed within vehicles where vibration and jolting can displace adherends.

The two spacers (700) of Figure 6c are depicted as being identical but it is not precluded that individual spacers may possess different geometries and / or be comprised of different materials. Moreover, a given spacer (700) need not be unitary but may comprise a plurality of elements provided this does not compromise the mechanical strength of the spacer or diminish the support role thereof. Still further, the number of spacers (700) and the disposal of the spacers within the fixative film (70) may be moderated to optimize that support function. The spacers (700) may be disposed at the extremities of the fixative film (70); alternatively or additionally said spacers (700) may interrupt the fixative film (70).

The spacers (700) should preferably be formed from electrically insulating polymeric materials which are flame retardant, which possess a suitable hardness and which are suited to meet impact strain requirements, for example by providing shock absorption or flexure for a support system. A Shore A hardness of from 20 to 95, for instance from 30 to 90 might be mentioned in this context. Exemplary polymeric materials include but are not limited to: polyvinyl chloride; polyalkylenes, such as polyethylene and polypropylene; polyacrylates such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. A preference for injection moldable polymeric materials may be noted. Such polymeric spacers (700) are not however precluded from comprising non-polymeric materials: spacers (700) comprising metal wire frame members encapsulated by said polymeric materials may be mentioned in this context.

As discussed above, the present disclosure also provides a bonded structure, wherein an electronic component is adhered to a frame using a curable electrochemically debondable adhesive composition. This embodiment does not require the electronic component to be enclosed within a housing or bonded to a wall thereof but rather provides a means of detachably supporting that electronic component. Having regard to Figures 6a to 6d discussed hereinabove, the second adherend (6A2) would be constituted by an integrant of the frame in this embodiment; a conductive film (CF) is disposed on the surface of the integrant, the film providing an electrically conductive surface of the frame; and, a fixative film (70) is disposed between said integrant (6A2) and said electrically conductive film (CF). An electronic component (6A1) is provided with an electrically conductive exterior surface (6A1s). Further, an adhesive (60) is disposed between and adheres the electrically conductive exterior surface (6A1s) of the electronic component (6A1) to the conductive film (CF). That adhesive (60) is obtained by curing a curable electrochemically debondable adhesive composition as described hereinbelow.

As shown in Figures 6c and 6d, the first adherend (6A1) and the conductive film (CF) are in electrical contact with an electrical power source (P) which may be a battery or an AC-driven source of direct current (DC). The positive and negative terminals of that power source (P) are shown in one fixed position but the skilled artisan will of course recognize that the polarity of the system can be reversed.

When an electrical voltage is applied between said first adherend (6A1) and the conductive film (CF), current is supplied to the cured adhesive (60) disposed therebetween. This induces electrochemical reactions at the interface of the adherend and film, which electrochemical reactions are understood as oxidative at the positively charged or anodic interface and reductive at the negatively charged or cathodic interface. The reactions are considered to weaken the adhesive bond between the substrates allowing the easy removal of the debondable composition from the adherend(s).

As depicted in Figure 6d, the debonding occurs at the positive interface, that interface between the adhesive (60) and the first conductive adherend (6A1) that is in electrical contact with the positive electrode. By reversing current direction prior to separation of the first adherend (6A1) and the conductive film (CF), the adhesive bond may be weakened at both interfaces.

It is however noted that the composition of the adhesive layer (60) may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / adherend interfaces. In an alternative embodiment, reversed polarity may be used to simultaneously disbond both adherend (6A1, 6A2) / adhesive interfaces if the composition does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present disclosure, it is considered that the debonding operation - as exemplified in Figures 4b, 5b and 6d - may be performed effectively where at least one and preferably both of the following conditions are instigated: a) an applied voltage of from 0.5 to 200 V; and, b) the voltage being applied for a duration of from 1 second to 120 minutes, for example from 1 second to 30 minutes. Where the release of a conductive surfaces from the cured adhesive (40,50,60) is to be facilitated by the application of a force - exerted via a weight or a spring, for instance - the potential might only need to be applied for the order of seconds.

### CURABLE ELECTROCHEMICALLY DEBONDABLE ADHESIVE COMPOSITION

The curable electrochemically debondable adhesive composition will be described in detail hereinbelow. By necessity this composition comprises: a non-polymerizable electrolyte; a rheology control agent; and, a matrix resin.

### Non-Polymerizable Electrolyte

Important electrolytes include the non-polymerizable salts of: ammonium; pyridinium; phosphonium; imidazolium; oxazolium; guadinium; and, thiazolium. More particularly, the electrolyte of the present invention should comprise at least one salt having a Formula selected from the group consisting of: 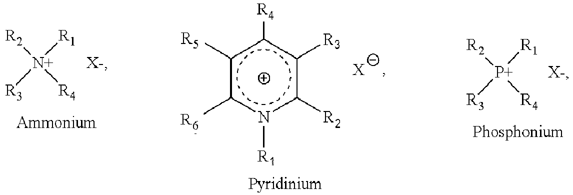 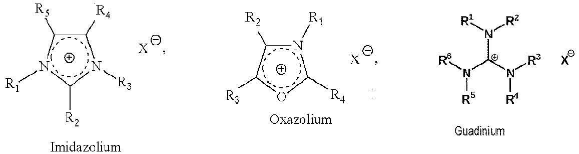 and 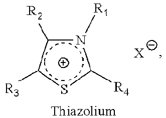 wherein: R¹, R², R³, R⁴, R⁵ and R⁶ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN and -NO₂; and,
R^{q} is C₁-C₆ alkyl.

Where an ammonium salt is used, it may be subject to the proviso that at most three and desirably at most two of the groups R¹ to R⁴ may be hydrogen.

As regards said moieties R¹ to R⁶, the terms C₁-C₁₈ alkyl, C₃-C₁₈ cycloalkyl, C₆-C₁₈ aryl, C₇-C₂₄ aralkyl, C₂-C₂₀ alkenyl expressly include groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R¹, R², R³, R⁴, R⁵ and R⁶ are independently selected from hydrogen, C₁-C₁₂ alkyl, C₁-C₁₂ haloalkyl, C₁-C₁₂ hydroxyalkyl and C₃-C₁₂ cycloalkyl. For example, R¹, R², R³, R⁴, R⁵ and R⁶ may be independently selected from hydrogen, C₁-C₆ alkyl, C₁-C₆ haloalkyl and C₁-C₆ hydroxyalkyl.

There is no particular intention to limit the counter anion (X-) which may be employed in the non-polymerizable electrolyte. Exemplary anions may be selected from:
- Halides;
- Pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻,
- CN⁻, SCN⁻ and OCN⁻;
- Phenates;
- Sulfates, sulfites and sulfonates of the general formulae SO₄ ²⁻, HSO₄ ⁻, SO₃ ²⁻, HSO₃ ⁻, R^{a}OSO₃ ⁻ and R^{a}SO₃ ⁻;
- Phosphates of the general formulae PO₄ ³⁻, HPO₄ ²⁻, H₂PO₄ ⁻, R^{a}PO₄ ²⁻, HR^{a}PO₄ ⁻ and R^{a}R^{b}PO₄ ⁻;
- Phosphonates and phosphinates of the general formulae R^{a}HPO₃ ⁻,R^{a}R^{b}PO₂ ⁻ and R^{a}R^{b}PO₃ ⁻;
- Phosphites of the general formulae: PO₃ ³⁻, HPO₃ ²⁻, H₂PO₃ ⁻, R^{a}PO₃ ²⁻, R^{a}HPO₃ ⁻ and R^{a}R^{b}PO₃ ⁻;
- Phosphonites and phosphinites of the general formulae R^{a}R^{b}PO₂ ⁻, R^{a}HPO₂ ⁻, R^{a}R^{b}PO⁻ and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃ ³⁻, HBOs ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻;
- Boronates of the general formulae R^{a}BO₂ ²⁻ and R^{a}R^{b}BO⁻;
- Carbonates and carbonic acid esters of the general formulae HCOs ⁻, COs ²⁻ and R^{a}CO₃ ⁻;
- Silicates and silicic acid esters of the general formulae SiO₄ ⁴⁻, HSiO₄ ³⁻, H₂SiO₄ ²⁻, H₃SiO₄ ⁻, R^{a}SiO₄ ³⁻, R^{a}R^{b}SiO₄ ²⁻, R^{a}R^{b}R^{c}SiO₄ ⁻, HR^{a}SiO₄ ²⁻, H₂R^{a}SiO₄ - and HR^{a}R^{b}SiO₄ ⁻;
- Alkyl- and arylsilanolates of the general formulae R^{a}SiO₃ ³⁻, R^{a}R^{b}SiO₂ ²⁻, R^{a}R^{b}R^{c}SiO⁻, R^{a}R^{b}R^{c}SiO₃ ⁻, R^{a}R^{b}R^{c}SiO₂ - and R^{a}R^{b}SiO₃ ²⁻;
- Pyridinates and pyrimidinates;
- Carboxylic acid imides, bis(sulfonyl)imides and sulfonylimides of the general formulae: 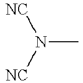 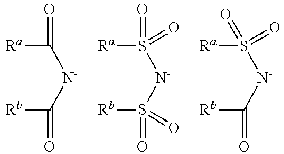
- Methides of the general formula: 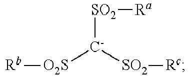
- Alkoxides and aryloxides of the general formula R^{a}O⁻; and,
- Sulfides, hydrogen sulfides, polysulfides, hydrogen polysulfides and thiolates of the general formulae S²⁻, HS-, [Sᵥ]²⁻, [HSᵥ]⁻ and [R^{a}S]⁻
in which general formulae
v is a whole positive number of from 2 to 10.
R^{a}, R^{b}, R^{c} and R^{d}are independently selected from hydrogen, a C₁-C₁₂ alkyl, C₅-C₁₂ cycloalkyl, C₅-C₁₂ heterocycloalkyl, C₆-C₁₈ aryl and C₅-C₁₈ heteroaryl.

Based on the definitions in the above list, preferred anions are selected from the group consisting of: halides; pseudohalides and halogen-containing compounds as defined above; carboxylic acid anions, in particular formate, acetate, propionate, butyrate and octanoate; hydroxycarboxylic acid anions, such as lactate; pyridinates and pyrimidinates; carboxylic acid imides, bis(sulfonyl)imides and sulfonylimides; sulfates, in particular methyl sulfate and ethyl sulfate; sulfites; sulfonates, in particular methanesulfonate; and, phosphates, in particular dimethyl-phosphate, diethyl-phosphate and di-(2-ethylhexyl)-phosphate.

The electrolyte is preferably selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl- pyrrolidinium 2-(2-fluoroanilino)-pyridinate, 1-butyl-1-methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, 1-butyl-1-methylpyrrolidinium bis (trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium trifluoromethanesulfonate, 1-butyl-3-methylimidazolium hexafluorophosphate, 1-ethyl-3-methylimidazolium trifluoromethanesulfonate, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tetrabutylphosphonium tris (pentafluoroethyl) trifluorophosphate, trihexyl(tetradecyl)phosphonium bis(trifluoromethylsulfonyl)imide, trihexyl (tetradecyl) phosphonium tetrafluoroborate and mixtures thereof. A particular preference for the use of at least one of trihexyl(tetradecyl)phosphonium bis(trifluoromethylsulfonyl)imide, 1-ethyl-3-methyl-1H-imidazol-3-um methanesulfonate, 1-ethyl-3-methylimidazolium trifluoromethanesulfonate and 1-ethyl-3-methyl-1H-imidazol-3-um methyl sulfate may be mentioned.

### Rheology Control Agent

The curable electrochemically debondable adhesive composition of the present disclosure comprises a rheology control agent. Said rheology control agent should preferably consist of: electrically non-conductive fillers; electrically conductive fillers; or, mixtures thereof.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1250 µm.

Exemplary non-conductive fillers include but are not limited to calcium carbonate, calcium oxide, calcium hydroxide (lime powder), precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

In an important embodiment, the electrically non-conductive particulate filler comprises or consists of glass beads having an average volume particle size, as measured by laser diffraction / scattering methods, of from 1 to 100 µm, for example from 5 to 75 µm. Good results have been obtained, for instance, where the composition comprises from 5 to 20 wt.%, based on the total weight of the composition, of said glass beads.

Glass beads included in the composition should preferably have a directionality-free shape and thereby be either spherical or substantially spherical. Further, it is preferred that at least a portion of included glass beads be coated with a coupling agent, such as an aminosilane or epoxy silane: typically any such coating will constitute from 0.01 to 5 wt.%, based on total weight of the glass bead.

For completeness, exemplary aminosilanes include γ-aminopropyltriethoxy silane, N-β-(aminoethyl)-γ-aminopropyltrimethoxy silane, γ-ureidopropyltriethoxy silane and N-β-(aminoethyl)-γ-aminopropyldimethoxymethyl silane.; exemplary epoxysilanes include γ-glycidoxypropyltrimethoxy silane, γ-glycidoxypropyltriethoxy silane, and β-(3,4-epoxycyclohexyl)ethyltrimethoxy silane.

When present, pyrogenic and/or precipitated silica should desirably have a BET surface area of from 10 to 90 m²/g. When they are used, they do not cause any additional increase in the viscosity of the composition according to the present invention, but do contribute to strengthening the cured composition.

It is likewise conceivable to use pyrogenic and/or precipitated silica having a higher BET surface area, advantageously from 100 to 250 m²/g as a filler: because of the greater BET surface area, the effect of strengthening the cured composition is achieved with a smaller proportion by weight of silicic acid.

Also suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the composition may be preferred for many applications: such fillers are also described as rheological adjuvants, e.g. hydrogenated castor oil, fatty acid amides, or swellable plastics such as PVC.

There is equally no particular intention to limit the shape of the particles which may be employed as conductive fillers: particles that are acicular, spherical, ellipsoidal, cylindrical, bead-like, cubic or platelet-like may be used alone or in combination. Moreover, it is envisaged that agglomerates of more than one particle type may be used. Moreover, there is no particular intention to limit the size of the particles employed as conductive fillers. However, such conductive fillers will conventionally have a median particle size by volume (Dv50), as measured by laser diffraction / scattering methods, of from 0.1 to 1500 µm, for example from 1 to 1250 µm.

Exemplary conductive particulate fillers include, but are not limited to: silver; copper; gold; palladium; platinum; nickel; gold or silver-coated nickel; carbon black; carbon fiber; graphite; aluminum; indium tin oxide; silver coated copper; silver coated aluminum; metallic coated glass spheres; metallic coated filler; metallic coated polymers; silver coated fiber; silver coated spheres; antimony doped tin oxide; conductive nanospheres; nano silver; nano aluminum; nano copper; nano nickel; carbon nanotubes; and, mixtures thereof. The use of particulate silver and / or carbon black as the conductive filler is preferred.

The desired viscosity of the curable composition formed may be determinative of the total amount of rheology control agent used. Having regard to that consideration, the total amount of rheology control agent present in the composition should not prevent the composition from being readily applicable by the elected method of application to the composition to a substrate. For example, curable compositions which are intended to be extrudable from a suitable dispensing apparatus, such as a tube, should possess a viscosity of from 1000 to 150,000, preferably from 10,000 to 100,000 mPas.

In an alternative expression, which is not intended to be mutually exclusive of that given immediately above, the rheology control agent is desirably present in the curable electrochemically debondable composition in an amount of from 10 to 80 wt.%, preferably from 20 to 70 wt.%, based on the total weight of the composition.

### Matrix Resin

As used herein, the term *"matrix resin"* refers to a curable resin system which will provide a continuous phase of the cured adhesive.

Illustrative matrix resins include: thermoplastic synthetic resins, such as polyolefin resins, EVA (ethylene-vinyl acetate copolymer) resins, vinyl acetate resins, vinyl acetate copolymers, ionomer resins, acrylic resins, acrylic copolymers, cyanoacrylate resins, vinyl chloride resins, polyvinyl acetal resins, polyurethane resins, polyester resins and polyamide resins; thermosetting synthetic resins such as acrylic resins, acrylic-epoxy hybrid resins, maleimide resins, urea resins, melamine resins, phenolic resins, epoxy resins, epoxy-phenolic hybrid resins, polyurethane resins, urethane prepolymers, polyurethane-epoxy hybrid resins, polyester resins and diallyl phthalate resins; and, moisture-curing resins such as urethane prepolymers and modified silicone resins.

For completeness, urethane prepolymers are reaction products obtained by reacting a polyol with a polyisocyanate compound such that there is a stoichiometric excess of isocyanate (NCO) groups with respect to hydroxyl (OH) groups). Further, exemplary modified silicone resins include polymers having (C₂-C₆)alkylene oxide monomer units on the main chain and having at least one hydrolyzable silicon-containing group per molecule.

It is preferred that the adhesive compositions of the present disclosure comprise a matrix resin selected from the group consisting of: epoxy resins; acrylic resins; polyurethane resins; acrylic-epoxy hybrid epoxy resins; and, polyurethane-epoxy hybrid resins. Further details of adhesive compositions containing said matrix resins will be provided herein below.

### Additives and Adjunct Ingredients

The curable electrochemically debondable adhesive compositions of the present disclosure will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: catalysts; solubilizers; tougheners; plasticizers; stabilizers including UV stabilizers; antioxidants; wax; reactive diluents; dessicants or moisture scavengers; adhesion promoters; fungicides; flame retardants; rheological adjuvants; color pigments or color pastes; solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 40 wt.% of the total composition and preferably should not comprise more than 30 wt.% of the composition.

As the present disclosure envisages the utility of both one (1K) and two (2K) part compositions, it is noted for completeness that, in general, adjunct materials and additives which contain reactive groups will be blended into the appropriate part of a two part (2K) composition to ensure the storage stability thereof; unreactive materials may be formulated into either or both of the two parts.

Suitable classes of solubilizer include: polyphosphazenes; polymethylenesulfides; polyoxyalkylene glycols; polyethylene imines; silicone surfactants, such as polyalkylsiloxane and polyoxyalkylene modified polydimethylsiloxanes including but not limited to poly(C₂-C₃)oxyalkylene modified polydimethylsiloxanes; polpolyhydric alcohols; and, sugars. For completeness, fluorinated silicone surfactants, such as fluorinated polysilanes, are intended to be encompassed within the term silicone surfactants.

Polyhydric alcohols and sugars having utility as solubilizers and which may be used alone or in combination, include, but are not limited to: ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, di(trimethylolpropane), trimethylolpropane ethoxylate, 2-hydroxymethyl-1,3-propanediol, pentaerythritol allyl ether and pentaerythritol.

Of the polyoxyalkylene glycols, a particular preference for the use of polyoxy(C₂-C₃)alkylene glycols having a weight average molecular weight of from 200 to 10000 g/mol, for example 200 to 2000 g/mol, may be noted.

The presence of tougheners in the present adhesive composition can, in certain circumstances, be advantageous to the debonding of the cured adhesive. Without intention to be bound by theory, tougheners can facilitate phase separation within the cured adhesive under the application of electrical potential. In an exemplary embodiment, the adhesive of the present invention might thus comprise from 0.1 to 10 wt.%, based on the weight of the composition, of a polybutadiene based toughener. Exemplary commercial polybutadiene based tougheners include Poly bd^{®} R20 LM and Poly bd^{®} 15 HT available from Cray Valley.

The addition of certain additives may promote the adhesion of the coating compositions to particular substrates. In this regard, the composition of the present invention may comprise from 0 to 5 wt.%, for example from 0.5 to 5 wt.% based on the weight of the composition, of: (v) at least one additive selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); and, citric acid (2-hydroxypropane-1 ,2,3-tricarboxylic acid). Of these compounds a preference for the use - alone or in combination - of citric acid, gallic acid and, in particular, para-aminosalicylic acid (PAS) may be mentioned.

A *"plasticizer"* for the purposes of this disclosure is a substance that decreases the viscosity of the composition and thus facilitates its processability. Herein the plasticizer may constitute up to 10 wt.% or up to 5 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this disclosure are to be understood as antioxidants, thermal stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

In order to enhance shelf life even further, it is often advisable to further stabilize the compositions of the present invention with respect to moisture penetration through using dessicants. Examples of suitable desiccants or moisture scavengers include, but are not limited to: silica gel; anhydrous calcium sulfate (anhydrite); calcium sulfate dihydrate (gypsum); calcium oxide; montmorillonite clay; molecular sieves such as those including natural or synthetic zeolite; and, activated alumina.

Waxes having utility in the present disclosure should have a softening point of from 50 to 150°C and may include one or more of: polyethylene having a number average molecular weight (Mn) from 500 to 7500; petroleum waxes, such as paraffin wax and microcrystalline wax; synthetic waxes made by polymerizing carbon monoxide and hydrogen, such as Fischer-Tropsch wax; polyolefin waxes including functionalized polyolefin waxes of which maleated polyethylene, maleated polypropylene and maleated poly(ethylene-co-propylene) may be mentioned as examples; and, hydrogenated animal, fish or vegetable oils.

A need also occasionally exists to lower the viscosity of an adhesive composition according to the present disclosure for specific applications, by using reactive diluent(s). The total amount of reactive diluents present will typically be from 0 to 10 wt.%, for example from 0 to 5 wt.%, based on the total weight of the composition.

The presence of solvents and non-reactive diluents in the compositions of the present disclosure is also not precluded where this can usefully moderate the viscosities thereof. For instance, but for illustration only, the compositions may contain one or more of: alkyl acetate solvents such as ethyl acetate, n-propyl acetate, butyl acetate, n-butyl acetate, propylene glycol monomethyl ether acetate and methoxypropyl acetate (MPA); alkyl propionate solvents such as n-butyl propionate and n-pentyl propionate; dibasic esters such as dimethyl succinate, dimethyl glutarate, dimethyl adipate; (di)alkyl carbonate solvents such as ethylene carbonate, propylene carbonate (PC), dimethyl carbonate (DMC), ethyl methyl carbonate (EMC) and diethyl carbonate (DEC); ethers such as tetrahydrofuran, dioxane and dimethoxyethane; glycol ether solvents such as ethylene glycol dimethyl ether, ethylene glycol diethyl ether, ethylene glycol dibutyl ether, ethylene glycol diphenyl ether, diethylene glycol, diethylene glycol-monomethyl ether, diethylene glycol-monoethyl ether, diethylene glycol-mono-n-butyl ether, diethylene glycol dimethyl ether, diethylene glycol diethyl ether, diethylene glycoldi-n-butylyl ether, propylene glycol butyl ether, propylene glycol phenyl ether, dipropylene glycol, dipropylene glycol monomethyl ether, dipropylene glycol dimethyl ether and dipropylene glycoldi-n-butyl ether; amide solvents dimethyl acetamide and N-methylpyrrolidone; ketone solvents such as acetone, diisobutyl ketone, isobutyl heptyl ketone, isophorone, methyl ethyl ketone, methyl n-amyl ketone and methyl isobutyl ketone; toluene; xylene; diphenylmethane; diisopropylnaphthalene; petroleum fractions such as Solvesso^{®} products (available from Exxon); and, chlorohydrocarbon solvents such as 4-chlorotrifluoromethylbenzene and 3,4-bis(dichloro)trifluoromethylbenzene.

The above aside, it is preferred that solvents and non-reactive diluents constitute *in toto* less than 15 wt.%, in particular less than 10 wt.%, based on the total weight of the composition.

### Epoxy Based Matrix Resin Systems

The matrix resin of the curable and electrochemically debondable adhesive composition may be based on epoxide compounds.

As such, there may be provided a curable and electrochemically disbondable one part (1K) adhesive composition comprising:
a non-polymerizable electrolyte;
a rheology control agent;
at least one epoxide compound; and,
a curing agent consisting of one or more compounds which have at least one epoxide reactive group;
wherein the composition is characterized by a molar ratio of epoxide-reactive groups to epoxide groups of from 0.6:1 to 1.2: 1, for example from 0.95: 1 to 1.1: 1.

In important embodiments of the disclosure, the one part (1K) adhesive composition comprises, based on the weight of the composition,
from 2 to 25 wt.%, preferably 5 to 20 wt.% of said electrolyte;
from 1 to 50 wt.%, preferably from 2 to 25%, of rheology control agent,
from 20 to 70 wt.%, preferably 20 to 60 wt.% of said at least one epoxide compound;
from 0.1 to 15 wt.%, preferably from 1 to 15%, of curing agent; and,
from 0 to 15 wt.%, preferably from 0.1 to 10 wt.% of accelerator,
wherein the composition is characterized by a molar ratio of epoxide-reactive groups to epoxide groups from 0.6:1 to 1.2: 1, for example from 0.75: 1 to 1.1: 1.

In the alternative, there may be provided a curable and electrochemically disbondable two part (2K) adhesive composition comprising:
a first part comprising:
   a non-polymerizable electrolyte; and,
   at least one epoxide compound; and,
a second part comprising:
   a curing agent consisting of at least one compound possessing at least two epoxide reactive groups per molecule,
wherein said composition further comprises a rheology control agent and further wherein the composition is characterized by a molar ratio of epoxide-reactive groups to epoxide groups from 0.6:1 to 1.2: 1, for example from 0.95: 1 to 1.1: 1. For completeness, the rheology control agent may be disposed in one or both parts of the composition.

In important embodiments of the invention, the two-part (2K) adhesive composition comprises, based on the weight of the composition,
from 2 to 25 wt.%, preferably 5 to 20 wt.% of said electrolyte;
from 1 to 50 wt.%, preferably from 2 to 25%, of rheology control agent,
from 20 to 70 wt.%, preferably 20 to 60 wt.% of said at least one epoxide compound;
from 0.1 to 15 wt.%, preferably from 1 to 15%, of curing agent; and,
from 0 to 15 wt.%, preferably from 0.1 to 10 wt.% of accelerator,
wherein the composition is characterized by a molar ratio of epoxide-reactive groups to epoxide groups from 0.6:1 to 1.2: 1, for example from 0.75: 1 to 1.1: 1.

Notably, the molar ratio of epoxide-reactive groups to epoxide groups of 1:1 is included within the above mentioned stated ranges. A highly preferred molar ratio of epoxide-reactive groups to epoxide groups provides for an excess of epoxide reactive groups and is from 0.75:1 to 0.95:1. For surety the term epoxide reactive groups includes latent reactive groups which are therefore included in the molar ratio term.

### Epoxide Compounds

Epoxide compounds as used herein may include mono-functional epoxide compounds, multi- or polyfunctional epoxide compounds, and combinations thereof. Part a) of the composition may be constituted by a single epoxide compound but equally may be mixtures of epoxide functional compounds, including mixtures of compounds having different numbers of epoxide groups per molecule. An epoxide compound may be saturated or unsaturated, aliphatic, cycloaliphatic, aromatic or heterocyclic and may be substituted. Further, the epoxide compound may also be monomeric or polymeric.

Illustrative monoepoxide compounds having utility in the present disclosure include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (E) herein below: 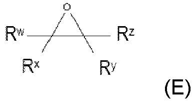 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present disclosure, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present disclosure, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present disclosure, mention may be made of: glycidyl ethers of polyhydric alcohols and polyhydric phenols; glycidyl esters of polycarboxylic acids; and, epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

The above aside, the epoxide-based adhesive compositions - irrespective of whether they are one (1K) or two (2K) part compositions - can in certain embodiments comprise glycidoxy alkyl alkoxy silanes having the formula: 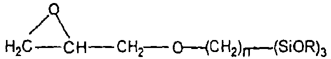 wherein:
each R is independently selected from methyl or ethyl; and,
n is from 1-10.

Exemplary silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than less than 20 wt.%, preferably less than 10 wt.% or less than 5 wt.%, based on the total weight of the epoxide compounds.

The present disclosure also does not preclude the epoxide-based curable compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of the epoxide compounds.

### Curing Agent for Said Epoxide Compounds

The curing agent for the epoxide based compositions consists of one or more compounds which have at least one epoxide reactive group. Equally, the curing agent may comprise or consist of latent curatives, including photo-latent curatives. Combinations of reactive and latent curatives are envisaged within the context of the present invention. That aside, the amount of curing agent present in the composition should broadly be sufficient to effect the complete cure of the epoxide compound(s).

Reactive curing agents may, in particular, include one or more of: i) at least one polyamine having at least two amine hydrogens reactive toward epoxide groups; ii) at least one mercapto compound having at least two mercapto groups reactive toward epoxide groups; and, iii) at least one Mannich base.

The at least one polyamine having at least two amine hydrogens reactive toward epoxide groups should, in particular, contain primary and / or secondary amine groups and have an equivalent weight per primary or secondary amine group of not more than 150 g/eq., more preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine@ RFD-270 (from Huntsman); polyoxyalkylenedi- or-triamines obtainable as products from the amination of polyoxyalkylenedi- and -triols and which are commercially available under the name of Jeffamine@ (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine@ D-4000, Jeffamine@ T-403, Jeffamine@ T-3000, Jeffamine@ T-5000, Jeffamine@ EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii) Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Exemplary compounds among the aforementioned polyamines having at least two primary aliphatic amine groups are: isophorone diamine (IPDA); hexamethylene diamine (HMDA); 1,3-bis(aminomethyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol of which commercial examples include Jeffamine@ D-230 and D-600 (available from Huntsman).

As noted above, the epoxide-based composition of the present disclosure may optionally comprise
- as the curing agent - at least one compound which has at least two reactive mercapto-groups per molecule. Suitable mercapto-group containing compounds, which may be used alone or in combination, include but are not limited to the following:
   - Mercaptan-terminated polyoxyalkylene ethers, obtainable by reacting polyoxyalkylenedi- and -triols either with epichlorohydrin or with an alkylene oxide, followed by sodium hydrogen sulfide.
   - Mercaptan-terminated compounds in the form of polyoxyalkylene derivatives, known under the trade name of Capcure^{®} (from Cognis), in particular the types WR-8, LOF and 3-800 thereof.
   - Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
   - 2,4,6-trimercapto-1,3,5-triazine, 2,2'-(ethylenedioxy)-diethanethiol (triethylene glycol dimercaptan) and / or ethanedithiol.
   - Tris(2-(mercaptopropionyloxy)ethyl)isocyanate.

A preference is acknowledged for the use of polyesters of thiocarboxylic acids and, in particular, for the use of at least one of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate and glycol dimercaptoacetate.

As noted above, a reactive curative may comprise at least one Mannich base. Such compounds may be characterized by containing at least one phenalkamine and, in particular, a phenalkamine obtained from the condensation of cardanol (CAS Number: 37330-39-5), an aldehyde and an amine. The reactant amine in the condensation reaction is desirably ethylenediamine or diethyltriamine.

Mannich bases and phenalkamines are known in the art and suitable examples include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Any common latent epoxy curing agents used in the art can be used in the present disclosure without special limitations. For example, suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376. Further, examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and, Sunmide LH-210, Ancamin 2014AS/FG and Ancamin 2337S commercially available from Air Products and Chemicals, Inc.

As is known in the art, dicyandiamide finds common utility as a latent epoxy curing agent and may indeed be used in the present compositions. When employed, it is preferred that said dicyandiamide is in finely divided form: an average particle size (d50) of from 0.5 to 100 µm, for example from 1 to 50 µm or from 2 to 20 µm might be noted as desirable. Said particle size refers to the diameter or largest dimension of a particle in a distribution of particles and is measureable via dynamic light scattering.

Further exemplary latent epoxy curing agents include but are not limited: ketimines obtainable by the reaction of aliphatic polyamines and ketones; polyethyleneimines, in particular polyethyleneimines having a weight average molecular weight (Mw) from 700 to 1,000,000 g/mol.; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides such as succinohydrazide, adipohydrazide, isophtholohydrazide o-oxybenzohydrazide and salicylohydrazide.

### Optional Accelerators

The epoxide-based compositions may, in certain embodiments, comprise accelerators: these are substances that promote the reaction between the epoxide groups and the epoxide-reactive groups, for instance the reaction between the amine or thiol groups and the epoxide groups. A specific example relates to the use of an amine accelerator which functions by de-protonation of reactive thiol (-SH) groups present to thiolate (-S"), which thiolate reacts with epoxy group by nucleophilic ring opening polymerization.

Without intention to the limit the accelerators having utility herein, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) tertiary amines, such as 2piperazin-1-ylethanamine, 1,4-diazabicyclo[2.2.2]octane, benzyldimethylamine, α-methylbenzyl dimethylamine, triethanolamine, dimethylamino propylamine, imidazoles - including N-methylimidazole, N-vinylimidazole and 1,2-dimethylimidazole - and salts of such tertiary amines; iii) quaternary ammonium salts, such as benzyltrimethyl ammonium chloride; iv) amidines, such as 1,8-diazabicyclo[5.4.0]undec-7-ene; v) guanidines, such as 1,1,3,3-tetramethylguanidine; vi) phenols, in particular bisphenols; vii) phenol resins; and, viii) phosphites, such as di- and triphenylphosphites. In an embodiment, the accelerator for curing a composition based on epoxy resins may be a photobase generator: upon exposure to UV radiation - typically in the wavelength from 320 to 420 nm - said photobase generator releases an amine, which catalyzes the addition of the epoxide reactive groups to the epoxide. The photobase generator is not specifically limited so long as it generates an amine directly or indirectly with light irradiation. The preparation of suitable photobase generator compounds is known in the art and an instructive reference includes U.S. 5,650,261 (Winkel). That aside, suitable photobase generators which may be mentioned include: benzyl carbamates; benzoin carbamates; o-carbamoylhydroxyamines; O-carbamoyloximes; aromatic sulfonamides; alpha-lactams; N- (2-allylethenyl)amides; arylazide compounds, N-arylformamides, and 4-(ortho-nitrophenyl)dihydropyridines.

In an alternative embodiment, an acid accelerator may be selected from photoacid generators (PAGs): upon irradiation with light energy, ionic photoacid generators undergo a fragmentation reaction and release one or more molecules of Lewis or Bronsted acid that catalyze the ring opening and addition of the pendent epoxide groups to form a crosslink. Useful photoacid generators are thermally stable, do not undergo thermally induced reactions with the forming copolymer and are readily dissolved or dispersed in the curable compositions.

Exemplary cations which may be used as the cationic portion of the ionic PAG of the invention include organic onium cations such as those described in US Patent No. 4,250,311, US Patent No. 3,113,708, US Patent No. 4,069,055, US Patent No. 4,216,288, US Patent No. 5,084,586, US Patent No. 5,124,417, and, US Patent No. 5,554,664. The references specifically encompass aliphatic or aromatic Group IVA and VIIA (CAS version) centered onium salts, with a preference being noted for I-, S-, P-, Se- N- and C-centered onium salts, such as those selected from sulfoxonium, iodonium, sulfonium, selenonium, pyridinium, carbonium and phosphonium.

As is known in the art, the nature of the counter-anion in the ionic photoacid generator (PAG) can influence the rate and extent of cationic addition polymerization of the epoxide groups with, for illustration, the order of reactivity among commonly used nucleophilic anions being SbF₆ > AsF₆ > PF₆ > BF₄. The influence of the anion on reactivity has been ascribed to three principle factors which the skilled artisan should compensate for in the present invention: (1) the acidity of the protonic or Lewis acid generated; (2) the degree of ion-pair separation in the propagating cationic chain; and, (3) the susceptibility of the anions to fluoride abstraction and consequent chain termination.

*In toto* photoinitiator should be present in the photo-curable composition in amount of from 0 to 5 wt.%, for example from 0 to 2.0 wt.% or from 0 to 1.5 wt.%, based on the total weight of the composition.

As would be recognized by the skilled artisan, photosensitizers can be incorporated into the compositions to improve the efficiency with which the photoinitiator uses the energy delivered. The term *"photosensitizer"* is used in accordance with its standard meaning to represent any substance that either increases the rate of photoinitiated polymerization or shifts the wavelength at which polymerization occurs. When present, photosensitizers should be used in an amount of from 5 to 25 wt.%, based on the weight of the photoinitiator.

The use of photoinitiator(s) - and where applicable photosensitizer(s) - may produce residue compounds from the photochemical reaction in the final cured product. The residues may be detected by conventional analytical techniques such as: infrared, ultraviolet and NMR spectroscopy; gas or liquid chromatography; and, mass spectroscopy. Thus, the present invention may comprise cured matrix (co-)polymers and detectable amounts of residues from at least the photoinitiator. Such residues are present in small amounts and do not normally interfere with the desired physiochemical properties of the final cured product.

Without intention to limit the present disclosure, a mixture comprising one or more photoinitiators may be irradiated with activating radiation to polymerize monomeric component(s) contained therein. The purpose of the irradiation is to generate the active species from the photoinitiator which initiates the cure reactions. Once that species is generated, the cure chemistry is subject to the same rules of thermodynamics as any chemical reaction: the reaction rate may be accelerated by heat.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

It is preferred in the present invention to employ an accelerator comprising or consisting of at least one tertiary amine, at least one amidine or mixtures thereof. More particularly, accelerator should be selected from the group consisting of imidazole, methylimidazole, benzyldimethylamine, 1,8-diazabicyclo[5.4.0]undec-7-ene, 1,4-diazabicyclo(2,2,2)octane and mixtures thereof.

### Illustrative Embodiment of a Two-Part (2K) Composition based on Epoxy Resins

In a first exemplary embodiment of the present disclosure, there is provided a two-part (2K) adhesive composition comprising:
a first part comprising, based on the weight of the composition
   from 2 to 25 wt.%, preferably 5 to 20 wt.% of non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts;
   from 0 to 15 wt.%, preferably from 1.5 to 10 wt.%, of solubilizer, wherein said solubilizer comprises a polyoxy(C₂-C₃)alkylene glycol having a weight average molecular weight of from 200 to 10000 g/mol, for example 200 to 2000 g/mol; and,
   from 20 to 70 wt.%, preferably 20 to 60 wt.% of at least one epoxide compound;
a second part comprising:
   a curing agent consisting of at least one compound possessing at least two epoxide reactive groups per molecule, wherein said curing agent comprises at least one polyamine having at least two amine hydrogens reactive toward epoxide groups, said polyamine being further characterized by containing primary and / or secondary amine groups and having an equivalent weight per primary or secondary amine group of not more than 150 g/eq; and,
   from 0 to 15 wt.%, preferably 0.1 to 10 wt.% of accelerator, wherein said accelerator is selected from the group consisting of tertiary amines, quaternary ammonium salts, amidines, guanidines and mixtures thereof,
wherein said composition is further characterized
by comprising from 1 to 50 wt.%, preferably from 2 to 25%, of rheology control agent; and,
by a molar ratio of epoxide-reactive groups to epoxide groups of from 0.75: 1 to 1.1: 1.

### ACRYLIC BASED MATRIX RESIN SYSTEMS

As noted above, the matrix resin of the curable and electrochemically debondable adhesive composition may be based on ethylenically unsaturated compounds. In particular, in accordance with an important embodiment of the disclosure, there is provided a curable and debondable two-part (2K) adhesive composition comprising:
a first part (A) comprising:
   a non-polymerizable electrolyte;
   (meth)acrylate monomer;
   co-polymerizable acid; and,
a second part (B) comprising:
   a first curing agent for the monomers of said first part;
   a second curing agent for the monomers of said first part;
wherein said two-part (2K) adhesive composition further comprises a rheology control agent. For completeness, the rheology control agent may be disposed in one or both parts of the composition.

As an exemplary embodiment of such an acrylic-based composition, there is provided a curable and debondable two-part (2K) adhesive composition comprising:
a first part (A) comprising, based on the weight of said first part:
   from 0.5 to 20 wt.%, preferably from 5 to 15 wt.%, of said electrolyte;
   from 20 to 80 wt.%, preferably from 30 to 60 wt.%, of said (meth)acrylate monomer; and,
   from 0.5 to 20 wt.%, preferably from 5 to 15 wt.%, of said co-polymerizable acid; and, a second part (B) comprising, based on the weight of said second part:
      from 5 to 40 wt.%, preferably from 10 to 40 wt.% of said first curing agent;
      from 0.01 to 2 wt.%, preferably from 0.01 to 1 wt.% of said second curing agent;
      from 5 to 30 wt.%, preferably from 5 to 20 wt.% of wax; and,
      from 20 to 60 wt.%, preferably from 30 to 60 wt.% of solubilizer,
wherein said composition further comprises, based on the total weight of the composition:
from 1 to 20 wt.% of said rheology control agent; and,
from 0.1 to 5 wt.%, preferably from 0.1 to 2 wt.% of said oxygen scavenger.

The first (A) and second (B) parts are conventionally combined at a ratio by weight of A:B of from 20:1 to 1:1, for example 15:1 to 5:1 or from 12:1 to 8:1. A particularly preferred embodiment of the composition has a ratio by weight of Part A: Part B of 10:1.

### (Meth)acrylate Monomer

There is no particular intention to limit (meth)acrylate esters having utility herein and it is considered that the (meth)acrylate monomers may be any ester of acrylic acid or methacrylic acid known to the art.

That said, exemplary (meth)acrylic monomers include but are not limited to:
- C₁-C₁₈ alkyl esters of (meth)acrylic acid, such as methyl (meth)acrylate, ethyl (meth)acrylate, n-propyl (meth)acrylate, isopropyl (meth)acrylate, butyl (meth)acrylate (all isomers), hexyl (meth)acrylate, n-heptyl(meth)acrylate, n-octyl(meth)acrylate, 2-ethylhexyl (meth)acrylate, n-nonyl(meth)acrylate, n-decyl(meth)acrylate, n-dodecyl(meth)acrylate and n-stearyl(meth)acrylate;
- C₃-C₁₈ cycloalkyl esters of (meth)acrylic acid, such as cyclohexyl(meth)acrylate and isobornyl(meth)acrylate;
- C₆-C₁₈ aryl esters of (meth)acrylic acid, such as phenyl(meth)acrylate and tolyl(meth)acrylate;
- C₇-C₂₄ aralkyl esters of (meth)acrylic acid, such as benzyl(meth)acrylate;
- C₁-C₁₈ alkoxyalkyl esters of (meth)acrylic acid, such as 2-methoxyethyl(meth)acrylate, 2-ethoxyethyl(meth)acrylate and 3-methoxybutyl(meth)acrylate;
- fluorine-containing C₁-C₁₈ alkyl esters of (meth)acrylic acid, such as trifluoromethylmethyl(meth)acrylate, 2-trifluoromethylethyl(meth)acrylate, 2-perfluoroethylethyl(meth)acrylate, 2-perfluoroethyl-2-perfluorobutylethyl(meth)acrylate, 2-perfluoroethyl(meth)acrylate, perfluoromethyl(meth)acrylate, diperfluoromethylmethyl(meth)acrylate, 2-perfluoromethyl-2-perfluoroethylmethyl(meth)acrylate, 2-perfluorohexylethyl(meth)acrylate, 2-perfluorodecylethyl(meth)acrylate and 2-perfluorohexadecylethyl(meth)acrylate;
- C₁-C₁₈ hydroxyalkyl esters of (meth)acrylic acid, such as 2-hydroxyethyl(meth)acrylate, 2-hydroxypropyl(meth)acrylate and pentaerythritol tri(meth)acrylate;
- di/poly-esters of di/poly-functional alcohols, such as ethylene glycol di(meth)acrylate, 1,3 or 1,4-butanediol di(meth)acrylate, 1,6-hexanediol di(meth)acrylate and trimethylolpropane tri(meth)acrylate;
- C₁-C₁₈ aminoalkyl esters of (meth)acrylic acid, such as 2-aminoethyl(meth)acrylate, dimethylaminoethyl (meth)acrylate and (meth)acryloxyethoxyethylamine;
- C₁-C₁₈ alkoxysilyl-containing alkyl esters of (meth)acrylic acid, such as γ-(methacryloyloxypropyl)trimethoxysilane;
- ethylene oxide or propylene oxide adducts of (meth)acrylic acid; and,
- (meth)acrylate esters formed by alcohols bearing other functional groups, such as tetrahydrofurfuryl (meth)acrylate.

For completeness, it is not precluded that the first part of the composition comprises a macromonomer component consisting of one or more oligomers selected from the group consisting of urethane (meth)acrylates, polyester (meth)acrylates and polyether (meth)acrylates. However, such oligomeric compounds - which may be mono- or polyfunctional with respect to the polymerizable (meth)acrylate functionality but which are based on repeated structural urethane, ester and ether subunits - should not usually constitute more than 30 wt.% of the total of (meth)acrylate monomers in said first part.

As is known in the art, urethane (meth) acrylate oligomers may be prepared by reaction of a polyfunctional (meth)acrylate bearing a hydroxyl group with a polyisocyanate as defined herein above. In particular, the polyfunctional (meth)acrylate bearing a hydroxyl group may be selected from the group consisting of: 2-hydroxyethyl (meth)acrylate; 2-hydroxyisopropyl (meth)acrylate; 4-hydroxybutyl (meth)acrylate; hydroxyethylcaprolactone (meth)acrylate; pentaerythritol tri(meth)acrylate; pentaerythritol tetra(meth)acrylate; dipentaerythritol penta(meth)acrylate; dipentaerythritol hexa(meth)acrylate; and, combinations thereof.

Suitable polyester (meth)acrylate oligomers are obtained by reacting (meth)acrylic acid with a polyester prepared from a polybasic acid or an anhydride thereof and a polyhydric alcohol. Examples of the polybasic acid include but are not limited to: phthalic acid; succinic acid; adipic acid; glutaric acid; sebacic acid; isosebacic acid; tetrahydrophthalic acid; hexahydrophthalic acid; dimer acid; trimellitic acid; pyromellitic acid; pimelic acid; and, azelaic acid. Examples of the polyhydric alcohol include but are not limited to: 1,6-hexanediol; diethylene glycol; 1,2-propylene glycol; 1,3-butylene glycol; neopentyl glycol; dipropylene glycol; polyethylene glycol; and, polypropylene glycol.

As is known in the art, polyether (meth)acrylate oligomers may be obtained by an ester exchange reaction between a polyether and a (meth)acrylate ester, such as ethyl methacrylate. Exemplary polyethers include polyethers obtained from ethoxylated or propoxylated trimethylolpropane, pentaerythritol or the like, or by polyetherification of 1 ,4-propanediol or the like.

In preferred embodiments, the first part comprises at least one (meth)acrylate monomer selected from the group consisting of: methyl (meth)acrylate; ethyl (meth)acrylate; n-propyl (meth)acrylate; isopropyl (meth)acrylate; n-butyl(meth)acrylate; isobutyl (meth)acrylate; tert-butyl (meth)acrylate; n-pentyl (meth)acrylate; n-hexyl (meth)acrylate; cyclohexyl (meth)acrylate; n-heptyl (meth)acrylate; n-octyl(meth)acrylate; 2-ethylhexyl-(meth)acrylate; nonyl (meth) acrylate; decyl (meth)acrylate; dodecyl (meth)acrylate; phenyl (meth)acrylate; tolyl (meth)acrylate; benzyl (meth)acrylate; 2-methoxyethyl (meth)acrylate; 3-methoxybutyl (meth)acrylate; 2-hydroxyethyl (meth)acrylate; 2-hydroxypropyl(meth)acrylate; stearyl(meth)acrylate; glycidyl (meth)acrylate; isobornyl (meth)acrylate; 2-aminoethyl (meth)acrylate; y-(meth)acryloyloxypropyl trimethoxysilane; (meth)acrylic acid-ethylene oxide adduct; trifluoromethylmethyl (meth)acrylate; 2-trifluoromethylethyl (meth)acrylate; 2-perfluoro ethylethyl (meth)acrylate; 2-perfluoroethyl-2-perfluorobutylethyl (meth)acrylate; 2-perfluoroethyl (meth)acrylate; perfluoromethyl (meth)acrylate; diperfluoromethylmethyl (meth)acrylate; 2-perfluoromethyl-2-perfluoroethylmethyl (meth)acrylate; 2-perfluorohexylethyl (meth)acrylate; 2-perfluorodecylethyl (meth)acrylate; 2-perfluorohexadecylethyl (meth)acrylate; ethoxylated trimethylolpropane triacrylate; trimethylol propane trimethacrylate; dipentaerythritol monohydroxypentacrylate; pentaerythritol triacrylate; ethoxylated trimethylolpropane triacrylate; 1,6-hexanedioldiacrylate; neopentyl glycoldiacrylate; pentaerythritol tetraacrylate; 1,2-butylene glycoldiacrylate; trimethylopropane ethoxylate tri(meth)acrylate; glyceryl propoxylate tri(meth) acrylate; trimethylolpropane tri(meth)acrylate; dipentaerythritol monohydroxy penta(meth)acrylate; tripropyleneglycol di(meth)acrylate; neopentylglycol propoxylate di(meth)acrylate; 1,4-butanediol di(meth)acrylate; triethyleneglycol di(meth)acrylate; butylene glycol di(meth)acrylate; and, ethoxylated bisphenol A di(meth)acrylate.

Good results have been obtained where the first part comprises at least one (meth)acrylate monomer selected from the group consisting of methyl (meth)acrylate, ethyl (meth)acrylate, isobornyl (meth)acrylate, ethoxylated trimethylolpropanetriacrylate and trimethylolpropane triacrylate. The use of methyl methacrylate in the first part is particularly preferred.

The above listed (meth)acrylate monomers are preferred because it is believed that the size of the monomer leads to a formation of an ideal polymer network, which increases ion transport.

It is known in the art that incorporation of certain additional, non-polymerizing functionalities into (meth)acrylate monomers can improve the surface adhesion of polymers derived therefrom. Mention in this regard may be made of anhydride, phosphate or phosphonate functionalities and (meth)acrylate monomers bearing such functionalities may be used in the first part of the present composition. A listing of such phosphorus compounds is found in US Patent No. 4,223,115. Exemplary monomers include: 2-monomethacryloxyethyl phosphate; bis(2-methacryloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; 2-hydroxyethylmethacrylate phosphate; 10-[(2-methylprop-2-enoyl)oxy]decyl dihydrogen phosphate *(10-methacryloyloxydecyl dihydrogen phosphate*); and, 4-methacryloxyethyl trimellitic anhydride.

### Co-Polymerizable Acid

As noted above, the first part of the composition comprises co-polymerizable acid. It is considered that the co-polymerizable acid will improve the cure speed and metal adhesion of the composition. For completeness, whilst such monomers should typically be used in the form of free acid, it is not precluded that the constituent acid groups of the monomers be partially or completely neutralized with suitable bases, provided this does not compromise their participation in co-polymerization.

Without intention to limit the present disclosure, co-polymerizable acid monomers should be selected from: ethylenically unsaturated carboxylic acids; ethylenically unsaturated sulfonic acids; and; vinylphosphonic acid. Suitable ethylenically unsaturated sulfonic acids are, for instance, vinylsulfonic acid, styrenesulfonic acid and acrylamidomethylpropanesulfonic acid.

Preferably the co-polymerizable acid of this part comprises or consists of ethylenically unsaturated carboxylic acids selected from the group consisting of: α,β-monoethytenically unsaturated monocarboxylic acids; α,β-monoethytenically unsaturated dicarboxylic acids; C₁-C₆ alkyl half-esters of α,β-monoethytenically unsaturated dicarboxylic acids; α,β-monoethytenically unsaturated tricarboxylic acids; and, C₁-C₆ alkyl esters of α,β-monoethylenically unsaturated tricarboxylic acids bearing at least one free carboxylic acid group; and, mixtures thereof. In particular, the co-polymerizable acid of this part comprises or consists of at least one acid selected from methacrylic acid, acrylic acid, itaconic acid, maleic acid, aconitic acid, crotonic acid and fumaric acid.

It is noted that the present disclosure does not preclude the presence in the first part of vinyl monomers which can be copolymerized with (meth)acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride, vinylidene chloride, allyl chloride and allylalcohol. However, when included, such vinyl co-monomers should constitute less than 40 wt.%, preferably less than 20 wt.% or less than 10 wt.%, based on the total weight of co-polymerizable acid monomers.

### First Curing Agent

The first curing agent comprises or consists of at least one free radical initiator which decomposes under the action of heat to provide free radicals. Exemplary heat-activated free-radical initiators include: peroxides, including ketone peroxides; hydroperoxides; peroxycarbonates; peracetic acids; azo compounds, such as 2,2'-azobisisobutyronitrile (AIBN) or 2,2'-azobis(2,4-dimethylpentanenitrile), 4,4'-azobis(4-cyanovaleric acid), or 1,1'-azobis (cyclohexanecarbonitrile); tetrazines; and, persulfate compounds, such as potassium persulfate. Free radical initiators that are solids at room temperature are preferred. Independently of or additional to that statement of preference, it is desirable that said free radical initiators have a half-life of at least 10 hours at a temperature of 60°C.

While certain peroxides - such as dialkyl and diaryl peroxides - have been disclosed as useful curing agents in *inter alia* US Patent No. 3,419,512 (Lees) and US Patent No. 3,479,246 (Stapleton) and indeed have utility herein, hydroperoxides also represent an important class of curing agent for the present invention. In this context, whilst hydrogen peroxide itself may be used, it is preferred to employ organic hydroperoxides. For completeness, included within the definition of hydroperoxides are materials such as organic peroxides or organic peresters which decompose or hydrolyze to form organic hydroperoxides *in situ:* examples of such peroxides and peresters are cyclohexyl and hydroxycyclohexyl peroxide and t-butyl perbenzoate, respectively.

Without intention to limit the present disclosure, representative hydroperoxide compounds have the general formula:

R^{p}OOH

wherein: RP is a hydrocarbon group containing up to 18 carbon atoms, and
preferably wherein: RP is a C₁-C₁₂ alkyl, C₆-C₁₈ aryl or C₇-C₁₈ aralkyl group.

As exemplary compounds, which may be used alone or in combination as the first curing agent, there may be mentioned: cumene hydroperoxide (CHP); para-menthane hydroperoxide; t-butyl hydroperoxide (TBH); t-butyl perbenzoate; t-butyl peracetate; t-amyl hydroperoxide; 1,2,3,4-tetramethylbutyl hydroperoxide; lauryl peroxide; benzoyl peroxide (also (known as dibenzoyl peroxide, C₁₄H₁₀O₄, CAS No. 94-36-0); 1,3-bis(t-butylperoxyisopropyl) benzene; diacetyl peroxide; butyl-4,4-bis(t-butylperoxy)valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t- butylperoxypentane.

Preferably said first curing agent is a peroxide or hydroperoxide compound selected from the group consisting of tert-butyl peroxide, tert-butyl perbenzoate, cumene hydroperoxide, tert-butyl peroxybenzoate, diacetyl peroxide, benzoyl peroxide, tert-butyl peracetate, lauryl peroxide and mixtures thereof: a particular preference for benzoyl peroxide is noted.

Where the first curing agent is an oxidizing agent - such as the aforementioned peroxide and hydroperoxide compounds - the composition may further comprise an activator. When combined in an appropriate proportion, the oxidizing agent and the activator (*reducing agent*) yield polymerization initiating radicals, even under mild conditions without a supplementary energy source. Either the oxidizing agent alone or both of the oxidizing agent and the reducing agent may provide polymerization initiating radicals.

Exemplary activators or reducing agents may be selected from the group consisting of: alkali metal sulfites; alkali metal hydrogensulfites; alkali metal metabisulfites; formaldehyde sulfoxylates; alkali metal salts of aliphatic sulfinic acids; alkali metal hydrogensulfides; salts of polyvalent metals, in particular Co(ll) salts and Fe(ll) salts such iron(II) sulfate, iron(II) ammonium sulfate or iron(II) phosphate; dihydroxymaleic acid; benzoin; ascorbic acid; reducing amines, in particular aromatic tertiary amines such as N,N-bis(2-hydroxyethyl)-p-toluidine (*diethanol-para-toluidine,* DE-p-T), 2-(4-dimethylaminophenyl)ethyl alcohol (DMAPE), 4-tert butyl dimethyl aniline, 3-dimethylaminobenzoic acid, 4-dimethylaminobenzoic acid, ethyl 4-dimethylaminobenzoate (EDMAB), 2-ethylhexyl 4-dimethylaminobenzoate and 4-dimethylaminobenzoate; and, reducing saccharides, such as sorbose, glucose, fructose and/or dihydroxyacetone.

It would be conventional for the activator (*reducing agent*) to be included in the first part with the polymerizable species. It is however not precluded that the activator be added to the second part shortly prior to the contacting of the first and second parts.

### Second Curing Agent

As noted above, the second part of the composition comprises a second curing agent which should typically be employed in an amount of from 0.01 to 2 wt.%, based on the weight of said second part: the second curing agent may preferably constitute from 0.01 to 1 wt.%, for example from 0.01 to 0.5 wt.% of said second part.

In an important embodiment, the second curing agent comprises or consists of at least one compound which is a salt or a complex of a transition metal, which transition metal may be selected from the group consisting of Fe, Co, V, Ti, Mn, Cu, Sn, Cr, Ni, Mo, Ge, Sr, Pd, Pt, Nb, Sb, Re, Os, Ir, Pt, Au, Hg, Te, Rb and Bi and should, in particular, be selected from the group consisting of Fe, Co, V, Mn and Cu. It is noted that both Fe(ll) and Fe(lll) complexes can be used.

It has proved advantageous for the second agent to comprise or consist of at least one iron compound selected from the group consisting of: iron carboxylates; iron 1,3-dioxo complexes; ammonium-ferric-ferrocyanide [ammonium iron(3+) hexakis(cyano-C)ferrate(4-)]; and, iron dicylcopentadienyl complexes. In this regard, exemplary iron carboxylates include iron lactate, iron naphthenate, iron 2-ethyl hexanoate (iron octanoate), iron formate, iron acetate, iron propionate, iron butyrate, iron pentanoate, iron hexanoate, iron heptanoate, iron nonanoate, iron decanoate, iron neodecanoate and iron dodecanoate. Exemplary iron 1,3-dioxo complexes include iron acetoacetonate, and the iron complexes of acetyl acetone, benzoyl acetone, dibenzoyl methane and acetoacetates such as diethyl acetoacetamide, dimethyl acetoacetamide, dipropylacetoacetamide, dibutylacetoacetamide, methyl acetoacetate, ethyl acetoacetate, propyl acetoacetate and butylacetoacetate. Examples of iron dicylcopentadienyl complexes are those complexes comprising iron and two substituted or unsubstituted cyclopentadienyl ligands, wherein the optional substituents on the cyclopentadienyl ring are selected from the group consisting of C₁-C₁₂ alkyl, C₆-C₁₈ aryl, and C₇-C₁₈ aralkyl groups. A particular example of an iron dicylcopentadienyl complex is ferrocene (bis(η5-cyclopentadienyl)iron).

As further exemplary transition metal compounds which may be used in or as the second curing agent, particular mention may be made of salts and complexes of copper, cobalt, vanadium and manganese. Herein cobalt compounds can be used as the transition metal without legislative and toxicity issues on account of the small amounts utilized. Suitable counteranions present in the salts include: halide; nitrate; sulphate; sulphonate; phosphate; phosphonate; oxide; or, carboxylate, such as lactate, 2-ethyl hexanoate, acetate, proprionate, butyrate, oxalate, laurate, oleate, linoleate, palmitate, stearate, acetyl acetonate, octanoate, nonanoate, heptanoate, neodecanoate or naphthenate.

### Oxygen Scavenger

The two-part (2K) composition based on acrylic resins may desirably be characterized by the presence of at least one oxygen scavenger. Said oxygen scavenger(s) may be included in either the first (A) or second (B) parts of the composition or in both parts thereof. When an oxygen scavenger is provided in both parts of the composition, the identity of the oxygen scavenger in each part is independently determined and, as such, may be the same or different for each part. It is preferred herein that the first part of the composition comprises an oxygen scavenger.

Said oxygen scavengers are reactive towards activated oxygen species and should also be stable in contact with oxygen or air at room temperature. Suitable examples of oxygen scavengers include: alkylated phenols; alkylated bisphenols; alkylidene bis-, tris- and polyphenols; thio-, bis-, tris- and polyalkylated phenols; sulfur-containing esters; organic phosphines; organic phosphites; organic phosphates; hydroquinones; inorganic compounds, such as sulphates, sulfites, phosphites and nitrites of metals, particularly those of Groups 1 and 2 of the periodic table and first row transition metals, zinc and tin; sulfur-containing compounds, such as thiodipropionic acid and its esters and salts, and thio-bis(ethylene glycol β-aminocrotonate); amino acids, such as cysteine and methionine; and, nitrogen-containing compounds capable of reacting with activated forms of oxygen including primary, secondary and tertiary amines. Preferably, the oxygen scavenger is selected from the group consisting of: triphenylphosphine; triethylphosphite; triisopropylphosphite; triphenylphosphite; tris(nonylphenyl) phosphite; butylated hydroxytoluene; butylated hydroxyanisole; tris(2,4-di-tert-butylphenyl) phosphite; dilaurylthiodipropionate; 2,2-methylene-bis-(6-t-butyl-p-cresol); tetrakis(2,4-d-tert-butylphenyl)4,4'-biphenylene diphosphonate; poly(4-vinylpyridine); and, mixtures thereof.

It is noted that the oxygen scavenger may be in the form of a polymer or oligomer. Such forms may be prepared by covalently bonding a compound - such as those oxygen scavengers listed - to a monomer or co-monomer. A limitation on the molecular size of the oxygen scavenger will be the effect, if any, it has on functional properties of any other polymer with which it is combined.

### Illustrative Embodiment of a Two-Part (2K) Composition based on Acrylic Resin

In a second exemplary embodiment of the present disclosure, there is provided a two-part (2K) adhesive composition comprising:
a first part (A) comprising, based on the weight of said first part:
   from 5 to 15 wt.%, preferably from 6 to 12 wt.% of non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts;
   from 30 to 60 wt.%, preferably from 35 to 50 wt.%, of (meth)acrylate monomer, wherein said (meth)acrylate monomer comprises at least one C₁-C₆ alkyl ester of (meth)acrylic acid; and,
   from 5 to 15 wt.%, preferably from 6 to 12 wt.%, of co-polymerizable acid, wherein said co-polymerizable acid is selected from the group consisting of methacrylic acid, acrylic acid, itaconic acid, maleic acid, aconitic acid, crotonic acid, fumaric acid and mixtures thereof; and,
a second part (B) comprising, based on the weight of said second part:
   from 10 to 40 wt.% preferably from 20 to 40 wt.% of a first curing agent which comprises or consists of at least one free radical initiator which decomposes under the action of heat to provide free radicals;
   from 0.01 to 1 wt.%, preferably from 0.01 to 0.5 wt.% of a second curing agent which consists of at least one compound which is a salt or a complex of a transition metal selected from the group consisting of Fe, Co, V, Mn and Cu;
   from 5 to 20 wt.%, preferably from 5 to 15 wt.% of a wax; and,
   from 30 to 60 wt.%, preferably from 40 to 60 wt.% of a solubilizer,
wherein said first part (A) of the two-part (2K) adhesive composition further comprises, based on the total weight of the composition:
from 0.1 to 2 wt.%, preferably from 0.1 to 1 wt.% of an oxygen scavenger; and,
from 1 to 10 wt.% of a rheology control agent,
further wherein said first (A) and second (B) parts are mixed at a ratio by weight of A:B of from 15:1 to 5:1, preferably of from 12:1 to 8:1 and more preferably of 10:1.

It is preferred in this second exemplary embodiment that the first curing agent is a peroxide or hydroperoxide compound selected from the group consisting of tert-butyl peroxide, tert-butyl perbenzoate, cumene hydroperoxide, tert-butyl peroxybenzoate, diacetyl peroxide, benzoyl peroxide, tert-butyl peracetate, lauryl peroxide and mixtures thereof: a particular preference for benzoyl peroxide is noted. Independently of or additional to this statement of preference for the first curing agent, the second curing agent preferably comprises of consists of at least one iron-based compound selected from the group consisting of ferrocene, iron(II) acetylacetonate and ammonium iron(3+) hexakis(cyano-C)ferrate(4-).

### POLYURETHANE BASED SYSTEMS

As noted above, the matrix resin of the curable and electrochemically debondable adhesive composition may be based on polyurethane. As such, there may be provided a curable and electrochemically debondable two-part (2K) adhesive composition comprising:
a first part comprising:
   non-polymerizable electrolyte;
   at least one polyol selected from the group consisting of fatty alcohols, polyester polyols, polyether polyols, polyether-polyester polyols and polycarbonate polyols; and,
   optionally further active hydrogen compounds; and,
a second part comprising at least one polyisocyanate,
wherein said composition is characterized in that the molar ratio of NCO groups to active hydrogen atoms is at least 1:1. Where the molar ratio is greater than 1:1, the stoichiometric excess of isocyanate (NCO) groups results in the formation of an NCO-functional polymer upon reaction of the first and second parts.

The curable and electrochemically debondable two-part (2K) adhesive composition preferably comprises, based on the weight of the composition:
a first part comprising:
   from 1 to 20 wt.%, preferably from 1 to 10 wt.% of non-polymerizable electrolyte;
   from 20 to 80 wt.%, preferably from 20 to 60 wt.% of at least one polyol selected from the group consisting of fatty alcohols, polyester polyols, polyether polyols, polyether-polyester polyols and polycarbonate polyols; and,
   optionally further active hydrogen compounds; and,
a second part comprising at least one polyisocyanate,
wherein said composition is characterized in that the molar ratio of NCO groups to active hydrogen atoms is from 1:1 to 1.2:1.

### Polyol(s)

At least one reactant polyol of the two-part (2K) composition of this embodiment must be selected from the group consisting of: fatty alcohols, polyester polyols, polyether polyols, polyether-polyester polyols and polycarbonate polyols. Such a polyol or polyols should preferably have a number average molecular weight (Mn) of from 200 to 50,000 g/mol, for instance from 200 to 8000 g/mol. Alternatively or additional to this molecular weight characterization, the hydroxyl number of the reactant polyol(s) should preferably be from 2 to 850 mg KOH/g, for instance from 25 to 500 mg KOH/g.

Polycarbonate diols may be obtained by reacting carbonic acid derivatives with diols. Exemplary carbonic acid derivatives are diaryl carbonates including but not limited to diphenyl carbonate, di(C₁-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1 ,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which example include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiolactone, δ-valerolactone, (C₁-C₆)alkyl-valerolactone, ε-caprolactone and (C₁-C₆)alkyl-ε-caprolactone. Exemplary commercial polyether-polyester polyols having utility in the present invention include Solvermol^{®} 805 and Solvermol^{®} 750 available from BASF.

The above aside, it is preferred that at least one polyol from which the polyurethane is derived is a polyether polyol, in particular a polyether polyol having a polydispersity (PD) of less than 2, preferably less than 1.5, and more preferably less than 1.3. For completeness, a *"polyether"* is understood for purpose of the present invention as a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably, the polyether polyol is a polyoxyalkylene glycol and in particular a polyoxy(C₂-C₃)alkylene glycol. For completeness, the term polyoxy(C₂-C₃)alkylene refers to polyether radicals derived from ethyleneoxide, propyleneoxide or both ethyleneoxide and propyleneoxide.

In some embodiments, the first part includes at least one fatty polyol. Suitable fatty polyols include, for instance fatty acids, esters of fatty acids, amides of fatty acids and dimers, trimers, oligomers or polymers of fatty acids thereof, provided said compounds possess two or more hydroxyl groups. The hydroxyl functions of a suitable fatty polyol may reside on the fatty acid residue, on other parts of the molecule, or on both.

As exemplary fatty polyols there may be mentioned: castor oil; the products of hydroxylation of unsaturated or polyunsaturated natural oils; the products of hydrogenation of unsaturated or polyunsaturated polyhydroxyl natural oils; polyhydroxyl esters of alkyl hydroxy fatty acids; polymerized natural oils; and, alkylhydroxylated amides of fatty acids. A preference may be noted for the use, either alone or in combination of: castor oil; hydroxylated soybean oil; hydrogenated castor oil; polymerized castor oil; hydroxy ethyl ricinoleate; and, hydroxy ethyl ricinoleamide.

### Optional Further Active Hydrogen Compounds

Certain polyols may function not only as reactants in the synthesis of the polyurethanes but also as solubilizers for the non-polymerizable electrolyte. Broadly, solubilizers have the function of promoting the miscibility of the electrolyte within the adhesive composition formed upon admixture of the two parts thereof: solubilizers are, as such, preferably polar compounds and should desirably be liquid at room temperature.

In this category there may be mentioned: polyoxyalkylene glycols; polpolyhydric alcohols; and, sugars. Whilst polyoxyalkylene glycols are mentioned hereinabove, it is noted that such a solubilizing function may be particularly attained through the use of polyoxy(C₂-C₃)alkylene glycols having a weight average molecular weight of from 200 to 10000 g/mol, for example 200 to 2000 g/mol.

Polyhydric alcohols and sugars having utility as solubilizers and which may be used alone or in combination, include, but are not limited to: ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, trimethylolpropane, di(trimethylolpropane), trimethylolpropane ethoxylate, 2-hydroxymethyl-1,3-propanediol, pentaerythritol allyl ether and pentaerythritol.

It is noted that at least one monol can preferably be employed in synthesizing the polyurethane as a further active hydrogen reactant ii). For example, a mono-functional hydrophilic polyoxyalkylene - such as polyoxyethylene or polyoxpropylene - can be incorporated into the polyurethane as a means of modifying the properties of the latex and improving its ease of emulsion formation. When included, the monol should present in an amount of from 0.1 to 5 wt.%, based on the weight of i) said at least one polyol.

The present disclosure does not preclude the presence in the first part of a chain extender, particularly as regards that embodiment where the NCO-functional compound(s) of the second part comprise or consist of an NCO-functional pre-polymer. As known to the skilled artisan, typical chain extenders have a weight average molecular weight (Mw) of from 18 to 500 g/mol and have at least two active hydrogen containing groups. Whilst water may therefore be used as a chain extender, it is however preferred that the two part 2K) composition is substantially free of water. The use of polyamines might be suggested however and as exemplary polyamines which may be used alone or in combination there may be mentioned: aminated polypropylene glycols such as Jeffamine D-400, available from Huntsman Chemical Company; hydrazine; piperazine; amino ethyl piperazine; 2-methyl piperazine; 1,5-diamino-3-methyl-pentane; isophorone diamine; ethylene diamine; diamino butane; hexane diamine; hexamethylene diamine; tetramethylene tetraamine; aminoethyl propyl trimethoxy silane; diethylene triamine; triethylene tetramine; triethylene pentamine; ethanolamine; and, lysine.

Where a chain extender is included, the added amount thereof is constrained by the aforementioned molar ratio of the active hydrogen atoms to the NCO groups in the two part (2K) composition.

### Polyisocyanate

The second part of the composition comprises at least one polyisocyanate. As used herein "*polyisocyanate*" means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6-hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term "*aromatic polyisocyanate*" is used herein to describe organic isocyanates in which the isocyanate groups are directly attached to the ring(s) of a mono- or polynuclear aromatic hydrocarbon group. In turn, the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene and chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized and / or isocyanurated by generally known methods, such as described in UK Patent No. 889,050.

The term "*polyisocyanate*" is here also intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s). When employed, the NCO-functional pre-polymers should preferably be characterized by at least one of: a) an NCO content of from 5 to 30%, preferably from 10 to 25 wt.% based on the weight of the pre-polymer; b) an NCO functionality of from 2.2 to 3.0, preferably from 2.2 or 2.4 to 2.9; c) a viscosity at 20°C of from 300 to 35,000 mPa.s, preferably from 1,000 to 10,000 mPa.s; and, d) a number average molecular weight (Mn) of from 500 to 30,000, for example from 500 to 15,000 or from 500 to 10,000 g/mol. For completeness, these characterizations a) to d) are not intended to be mutually exclusive: indeed, the pre-polymer may meet one, two, three or four of these stated characterizations.

Commercial examples of suitable polyisocanates include, without intention to limit the present invention: Desmodur product series, such as Desmodur E 744, available from Covestro Deutschland; Hysol HF6005 isocyanate, available from Henkel Corporation; Isonate M product series, available from The Dow Chemical Company; Lupranat product series, available from BASF; and, Suprasec product series, available from Huntsman.

### Optional Catalysts

The polyurethane-based composition - and conventionally the first part thereof - may comprise standard catalysts for the reaction between polyisocyanates and active hydrogen compounds, as known in the art. Such catalysts include but are not limited to: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate, bismuth neodecanoate complexes and complexes of bismuth with hydroxypropyl ethylene diamine and hydroxylethyl ethylene diamine, available as Bicat^{®} catalysts from Everchem Specialty Chemicals; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the isocyanate, the amount of catalyst employed is typically in the range from 0.005 to 5 wt.%, for example from 0.1 to 1 wt.% of the two part (2K) composition.

### Illustrative Embodiment of a Two-Part (2K) Composition based on Polyurethane Resin

In a third exemplary embodiment of the present disclosure, there is provided a curable and electrochemically debondable two-part (2K) adhesive composition comprising, based on the weight of the composition:
a first part comprising:
   from 20 to 80 wt.%, preferably from 20 to 60 wt.% of i) at least one polyol selected from the group consisting of fatty alcohols, polyester polyols, polyether polyols, polyether-polyester polyols and polycarbonate polyols;
   ii) optionally further active hydrogen compounds; and,
   from 1 to 20 wt.%, preferably from 1 to 10 wt.% of iii) non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts; and,
a second part comprising iv) at least one polyisocyanate,
wherein said composition further comprises, based on the weight of the composition:
from 0.5 to 5 wt.% of (v) at least one additive selected from the group consisting of: morin(2-(2,4-dihydroxy phenyl)-3,5,7-trihydroxy-4H-1-cumarone-4-ketone); 3,7-dihydroxy-2-naphthoic acid; pyrogallol carboxylic acid; 3,4-dihydroxy-benzene guanidine-acetic acid; gallic acid; para-aminosalicylic acid; 4,4'-methylene-bis(3-hydroxy-2-naphthoic acid; and, citric acid;
from 0.005 to 5 wt.%, preferably from 0.1 to 1 wt.% of catalyst; and,
from 0.5 to 10 wt.% of electrically non-conductive particulate filler,
further wherein said composition is characterized in that the molar ratio of NCO groups to active hydrogen atoms is from 1:1 to 1.2:1.

Whilst it is not strictly necessary, the aforementioned catalyst will normally be formulated in the first, polyol part of the composition.

### METHODS AND APPLICATIONS

To form a curable composition, the above-described parts are brought together and mixed. As is known in the art, to form one part (1K) curable compositions, the elements of the composition are brought together and homogeneously mixed under conditions which inhibit or prevent the reactive components from reacting: as would be readily comprehended by the skilled artisan, this might include mixing conditions which limit or prevent exposure to irradiation or which limit or prevent the activation of a constituent latent catalyst. As such, it will often be preferred that the curative elements are not mixed by hand but are instead mixed by machine - a static or dynamic mixer, for example - in pre-determined amounts under anhydrous conditions without intentional photo-irradiation.

For the two part (2K) curable compositions, the reactive components are brought together and mixed in such a manner as to induce the hardening thereof. For both one (1K) and two (2K) part compositions, the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers. For small-scale liner applications in which volumes of less than 2 liters will generally be used, the preferred packaging for the two part (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two parts of the composition may advantageously be stored in drums or pails: in this case the two parts are extruded via hydraulic presses, in particular by way of follower plates, and are supplied via pipelines to a mixing apparatus which can ensure fine and highly homogeneous mixing of the hardener and binder components. In any event, for any package it is important that the binder component be disposed with an airtight and moisture-tight seal, so that both components can be stored for a long time, ideally for 12 months or longer.

Non-limiting examples of two part dispensing apparatuses and methods that may be suitable for the present invention include those described in U.S. Patent No. 6,129,244 and US Patent No. 8,313,006.

In accordance with the broadest process aspects of the present invention, the above described compositions are applied to electrically conductive surface(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the coating compositions to the preferably pre-treated substrate surface may be facilitated by the application of a primer thereto. Indeed primer compositions may be necessary to ensure efficacious fixture and / or cure times of the adhesive compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The compositions are then applied to the preferably pre-treated, optionally primed surfaces of the substrate by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray.

The adhesive composition may be applied to at least one and preferably to each of the surfaces which are to be bonded: the surfaces are then subsequently contacted, optionally under the application of pressure, such that the electrically debondable adhesive composition is interposed between the surfaces.

It is recommended that the compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the invention typically occurs at temperatures in the range of from 40°C to 200°C, preferably from 50°C to 190°C, and in particular from 60°C to 180°C. The temperature that is suitable depends on the specific compounds present and the desired curing rate and can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective elements of the one part (1K) composition may be raised above the mixing temperature and / or the application temperature using conventional means including microwave induction.

For completeness, it is noted that the present invention does not preclude the preparation of epoxy adhesives in the form of "*film adhesive*". A pre-polymer mixture of epoxy resins, hardener, and other desired components is applied as a coating onto plastic substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

The following examples are illustrative of the present invention and are not intended to limit the scope of the invention in any way.

### EXAMPLE

The following materials were employed in the Example:

| | |
|---|---|
| D.E.R 331: | Epoxy. Liquid epoxy resin derived from Bisphenol-A, available from Olin |
| Premix 188182 PM-182: | Premix of Epoxy (DER331), fumed silica and barbituric acid, available from Henkel Corporation. |
| Silquest A-187: | Silane coupling agent, available from Momentive Performance Materials. |
| Cyphos IL 169: | Trihexyl(tetradecyl)phosphonium bis(trifluoromethylsulfonyl)imide, available from Solvay. |
| Aerosil R202: | Fumed silica, surface treated with polydiemethylsiloxane, available from Evonik Industries. |
| Luzenac 2: | Talc based anti-blocking agent, available from Imerys. |
| Omyacarb 4HD: | Particulate calcium carbonate, available from Omya. |
| GPX801: | Carbon black, available from Applied Nanostructured Solutions,LLC. |
| TMPMP: | Trimethylpropane tris(3-mercaptopropionate) available from Bruno Bock. |
| Ajicure PN-H: | Latent Curing Agent, available from Ajinmoto Fine-Techno Co. Ltd. |
| Teroson EP 5065: | Two-part (2K) epoxy adhesive composition, available from Henkel Corporation. |
| Teroson PU 6700: | Two-part (2K) polyurethane adhesive composition, available from the Henkel Corporation. |
| TCA: | Thermally conductive adhesive, available from Henkel Corporation. |

### Preparation

Parts (A) and (B) of the two-part (2K) compositions were independently prepared in accordance with Table 1 herein below:

**Table 1**

| | **Ingredient** | **Wt.% (based on weight of composition)** |
|---|---|---|
| **Part A** | | |
| 1 | D.E.R. 331 | 24.11 |
| 2 | Premix 188182 PM-182 | 0.25 |
| 3 | Silquest A-187 | 1.00 |
| 4 | Cyphos IL 169 | 3.00 |
| 5 | Aerosil R202 | 0.50 |
| 6 | Luzenac 2 | 2.38 |
| 7 | Omyacarb 4HD | 18.71 |
| 8 | GPX801 | 0.05 |

| **Part B** | | |
|---|---|---|
| 1 | TMPMP | 18.57 |
| 2 | Ajincure PN-H | 0.88 |
| 3 | Aerosil R202 | 0.58 |
| 4 | Omyacarb 4HD | 25.07 |
| 5 | Luzenac 2 | 4.90 |

The individual parts (A, B) were loaded into separate compartments of a 50g cartridge and sealed at both ends. The cartridge was then loaded into a cartridge-gun and a mixing tip was installed on the front end. By application of constant pressure on the trigger, the two parts were pushed into the mixing tip to ensure sufficient mixing before application to the stated substrate.

### Tensile Lap Shear Strength Testing

Bonded structures in accordance with Figures 6a to 6d appended hereto were employed for tensile lap shear strength testing. The first (6A1) and second (6A2) adherends of these structures both consist of aluminium (AL3003) with a thickness of 0.1 inch. These adherends (6A1, 6A2) were cut into strips 2.5 cm x 10 cm (1" x 4") in size for tensile testing. The conductive film (CF) of the bonded structures consists of aluminium foil having a thickness of 40 µm.

The applied two-part (2K) adhesive composition (60u) of Table 1 herein above was cured in the overlapping region by the application of a temperature of 60°C for 120 minutes. The bond overlapping area between the first adherend (6A1) and the conductive film (CF) was 2.5 cm x 2.5 cm (1" x 1") with a bond thickness of 0.1 cm (40 mil).

The bonded structures were further provided with two styrene-butadiene rubber (SBR)-based spacers (700) disposed 1.5 cm apart. Between said spacers (700), a curable fixative (70u) was provided as detailed in Table 2 herein below, which fixative (70u) was cured to form fixative film (70) in the overlapping region by the application of a temperature of 60°C for 120 minutes. The fixative film (70) had thickness when cured of 0.15 cm (60 mil).

After assembly, the bonded structures were stored at room temperature for 24 hours prior to initial tensile testing. Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.*

For each bonded structure, tensile lap shear strength was investigated after said 24 hour storage period both prior and subsequent to the application of a constant potential of 30V across the adhesive layer for a duration of 20 minutes. The results are documented in Table 2 herein below.

**Table 2**

| **Fixative (70)** | **Spacer (700)** | **Initial Bond Strength (MPa)** | **Bond Strength after 30 V, 20 minutes (MPa)** |
|---|---|---|---|
| Teroson EP 5065 | SBR, Shore A Hardness 65 | 12.3 (± 1.0) | 2.4 (± 0.4) |
| Teroson PU 6700 | SBR, Shore A Hardness 65 | 6.1 (± 0.6) | 1.3 (± 0.1) |
| TCA | SBR, Shore A Hardness 65 | 5.3 (± 0.1) | 2.0 (± 0.2) |

For all tested structures, the adhesive composition (40) provides effective electrochemical disbonding under the applied potential (30V, 20 min.).

In view of the foregoing description and example, it will be apparent to those skilled in the art that equivalent modifications thereof can be made without departing from the scope of the claims.

## Claims

1. An electronics assembly comprising:
a housing having walls which define an enclosure having at least one floored chamber, wherein at least one wall of the housing is provided with an electrically conductive surface which faces into a chamber;
n electronic components disposed in the enclosure, wherein n is an integer of at least 2 and wherein at least a fraction of said electronic components are provided with an electrically conductive exterior surface; and,
an adhesive by which said electrically conductive exterior surface of said fraction of electronic components is adhered to said electrically conductive surface of wall,
wherein the electronics assembly is **characterized in that** said adhesive is obtained by curing a curable electrochemically debondable adhesive composition comprising:
a non-polymerizable electrolyte;
a rheology control agent; and,
a matrix resin.

2. The electronics assembly according to claim 1, wherein n is an integer of from 2 to 5000, preferably from 100 to 2000.

3. The electronics assembly according to claim 1 or claim 2, wherein said housing comprises:
a cover, a base and a peripheral wall which together define the enclosure; and,
at least one dividing wall by which said enclosure is divided into discrete floored chambers.

4. The electronics assembly according to claim 3, wherein said cover is provided with an electrically conductive surface which faces into a chamber.

5. The electronics assembly according to claim 3 or claim 4, wherein the housing comprises at least two dividing walls which divide the housing into parallel discrete floored chambers.

6. The electronics assembly according to any one of claims 3 to 5, wherein the base is provided with a plurality of mounting wells and further wherein:
each well has a cross-sectional shape which is complimentary to the shape of a fraction of said electronic components; and,
each well has a depth which enables a part of a complimentary shaped electronic component to be received within the well.

7. A battery assembly according to claim 1, comprising:
a housing having:
a cover, a base and a peripheral wall which together define the enclosure; and,
at least two dividing walls which divide the housing into parallel discrete floored chambers;
wherein at least one wall selected from said peripheral wall and said dividing walls is provided with an electrically conductive surface which faces into a chamber;
n cylindrical battery cells disposed in the enclosure, wherein n is an integer of from 2 to 5000 and wherein a first fraction of said battery cells are provided with an electrically conductive exterior surface; and,
an adhesive by which said electrically conductive exterior surface of said first fraction of cells is adhered to said electrically conductive surface of wall,
wherein the battery assembly is **characterized in that** said adhesive is obtained by curing a curable electrochemically debondable adhesive composition comprising:
a non-polymerizable electrolyte;
a rheology control agent; and,
a matrix resin.

8. The battery assembly according to claim 7, wherein the base is provided with a plurality of mounting wells, each and further wherein:
each well has a cross-sectional shape which is complimentary to the shape of a fraction of said battery cells; and,
each well has a depth which enables a part of a complimentary shaped battery cell to be received within the well.

9. The electronics assembly according to any one of claims 1 to 8, wherein said at least one wall of the housing which is provided with an electrically conductive surface has a laminar structure comprising:
an integrant of electrically non-conductive material having an outer surface and an inner surface; and,
an electrically conductive film (CF) disposed on the inner surface of said integrant of electrically non-conductive material, the electrically conductive film (CF) providing said electrically conductive interior surface of the housing.

10. The electronics assembly according to claim 9, wherein the laminar structure further comprises a fixative film disposed between said integrant of electrically non-conductive material and said electrically conductive film (CF).

11. The electronics assembly according to claim 10, wherein the laminar structure further comprises at least one spacer which is disposed between said integrant of electrically non-conductive material and said electrically conductive film (CF), and wherein said at least one spacer either interrupts the fixative film or is disposed at an end thereof.

12. The electronics assembly according to any one of claims 1 to 11, wherein the non-polymerizable electrolyte of said adhesive is selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl- pyrrolidinium 2-(2-fluoroanilino)-pyridinate, 1-butyl-1-methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, 1-butyl-1-methylpyrrolidinium bis (trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium trifluoromethanesulfonate, 1-butyl-3-methylimidazolium hexafluorophosphate, 1-ethyl-3-methylimidazolium trifluoromethanesulfonate, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tetrabutylphosphonium tris (pentafluoroethyl) trifluorophosphate, trihexyl(tetradecyl)phosphonium bis(trifluoromethylsulfonyl)imide, trihexyl (tetradecyl) phosphonium tetrafluoroborate and mixtures thereof.

13. The electronics assembly according to claim 12, wherein the non-polymerizable electrolyte of said adhesive is selected from the group consisting of trihexyl(tetradecyl)phosphonium bis(trifluoromethylsulfonyl)imide, 1-ethyl-3-methyl-1H-imidazol-3-um methanesulfonate, 1-ethyl-3-methylimidazolium trifluoromethanesulfonate and 1-ethyl-3-methyl-1H-imidazol-3-um methyl sulfate.

14. The electronics assembly according to any one of claims 1 to 13, wherein the rheology control agent is present in said curable electrochemically debondable adhesive compositions in an amount of from 10 to 80 wt.%, preferably from 20 to 70 wt.%, based on the total weight of the composition.

15. The electronics assembly according to any one of claims 1 to 14, wherein the rheology control agent of said curable electrochemically debondable adhesive compositions consists of: electrically conductive filler; electrically non-conductive filler; or a mixture thereof.

16. The assembly according to any one of claims 1 to 15, wherein said matrix resin is selected from the group consisting of: epoxy resins; acrylic resins; polyurethane resins; acrylic-epoxy hybrid epoxy resins; and, polyurethane-epoxy hybrid resins.

17. The assembly according to any one of claims 1 to 16, wherein said curable electrically debondable adhesive compositions is a two-part (2K) adhesive composition comprising, based on the weight of the composition:
a first part comprising:
from 2 to 25 wt.%, preferably 5 to 20 wt.% of non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts; and,
from 0 to 15 wt.%, preferably from 1.5 to 10 wt.%, of solubilizer, wherein said solubilizer comprises a polyoxy(C₂-C₃)alkylene glycol having a weight average molecular weight of from 200 to 10000 g/mol, for example 200 to 2000 g/mol; and,
from 20 to 70 wt.%, preferably 20 to 60 wt.% of at least one epoxide compound;
a second part comprising:
a curing agent consisting of at least one compound possessing at least two epoxide reactive groups per molecule, wherein said curing agent comprises at least one polyamine having at least two amine hydrogens reactive toward epoxide groups, said polyamine being further **characterized by** containing primary and / or secondary amine groups and having an equivalent weight per primary or secondary amine group of not more than 150 g/eq; and,
from 0 to 15 wt.%, preferably 0.1 to 10 wt.% of accelerator, wherein said accelerator is selected from the group consisting of tertiary amines, quaternary ammonium salts, amidines, guanidines and mixtures thereof,
wherein said composition is further **characterized**
**by** comprising from 1 to 50 wt.%, preferably from 2 to 25%, of rheology control agent; and,
by a molar ratio of epoxide-reactive groups to epoxide groups of from 0.75: 1 to 1.1: 1.

18. The assembly according to any one of claims 1 to 16, wherein said curable electrically debondable adhesive compositions is a two-part (2K) adhesive composition comprising:
a first part (A) comprising, based on the weight of said first part:
from 5 to 15 wt.%, preferably from 6 to 12 wt.% of non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts;
from 30 to 60 wt.%, preferably from 35 to 50 wt.%, of (meth)acrylate monomer, wherein said (meth)acrylate monomer comprises at least one C₁-C₆ alkyl ester of (meth)acrylic acid; and,
from 5 to 15 wt.%, preferably from 6 to 12 wt.%, of co-polymerizable acid, wherein said co-polymerizable acid is selected from the group consisting of methacrylic acid, acrylic acid, itaconic acid, maleic acid, aconitic acid, crotonic acid, fumaric acid and mixtures thereof; and,
a second part (B) comprising, based on the weight of said second part:
from 10 to 40 wt.% preferably from 20 to 40 wt.% of a first curing agent which comprises or consists of at least one free radical initiator which decomposes under the action of heat to provide free radicals;
from 0.01 to 1 wt.%, preferably from 0.01 to 0.5 wt.% of a second curing agent which consists of at least one compound which is a salt or a complex of a transition metal selected from the group consisting of Fe, Co, V, Mn and Cu;
from 5 to 20 wt.%, preferably from 5 to 15 wt.% of a wax; and,
from 30 to 60 wt.%, preferably from 40 to 60 wt.% of a solubilizer,
wherein said first part (A) of the two-part (2K) adhesive composition further comprises, based on the total weight of the composition:
from 0.1 to 2 wt.%, preferably from 0.1 to 1 wt.% of an oxygen scavenger; and,
from 1 to 10 wt.% of a rheology control agent,
further wherein said first (A) and second (B) parts are mixed at a ratio by weight of A:B of from 15:1 to 5:1, preferably of from 12:1 to 8:1 and more preferably of 10:1.

19. The electronics assembly according to any one of claims 1 to 16, wherein said curable electrically debondable adhesive compositions is a two-part (2K) adhesive composition comprising, based on the weight of the composition:
a first part comprising:
from 20 to 80 wt.%, preferably from 20 to 60 wt.% of i) at least one polyol selected from the group consisting of fatty alcohols, polyester polyols, polyether polyols, polyether-polyester polyols and polycarbonate polyols;
ii) optionally further active hydrogen compounds; and,
from 1 to 20 wt.%, preferably from 1 to 10 wt.% of iii) non-polymerizable electrolyte, wherein said electrolyte comprises at least one non-polymerizable salt selected from the group consisting of: ammonium salts; pyridinium salts; phosphonium salts; imidazolium salts; oxazolium salts; guadinium salts; and, thiazolium salts; and,
a second part comprising iv) at least one polyisocyanate,
wherein said composition further comprises, based on the weight of the composition:
from 0.5 to 5 wt.% of (v) at least one additive selected from the group consisting of: morin(2-(2,4-dihydroxy phenyl)-3,5,7-trihydroxy-4H-1-cumarone-4-ketone); 3,7-dihydroxy-2-naphthoic acid; pyrogallol carboxylic acid; 3,4-dihydroxy-benzene guanidine-acetic acid; gallic acid; para-aminosalicylic acid; 4,4'-methylene-bis(3-hydroxy-2-naphthoic acid; and, citric acid;
from 0.005 to 5 wt.%, preferably from 0.1 to 1 wt.% of catalyst; and,
from 0.5 to 10 wt.% of electrically non-conductive particulate filler,
further wherein said composition is **characterized in that** the molar ratio of NCO groups to active hydrogen atoms is from 1:1 to 1.2:1.

20. A vehicle comprising an electronics assembly as defined in any one of claims 1 to 19.

21. A bonded structure comprising:
an electronic component provided with an electrically conductive exterior surface;
a frame provided with an electrically conductive surface; and,
an adhesive by which said electrically conductive exterior surface of said electronic components is adhered to said electrically conductive surface of the frame,
wherein the frame has a laminar structure comprising:
an integrant of electrically non-conductive material having an outer surface and an inner surface;
an electrically conductive film (CF) disposed on the inner surface of said integrant of electrically non-conductive material, the electrically conductive film (CF) providing said electrically conductive surface of the frame; and,
a fixative film disposed between said layer of electrically non-conductive material and said electrically conductive film (CF); and,
wherein said adhesive is obtained by curing a curable electrochemically debondable adhesive composition comprising:
a non-polymerizable electrolyte;
a rheology control agent; and,
a matrix resin.

22. The bonded structure according to claim 21, wherein the laminar structure further comprises a fixative film disposed between said integrant of electrically non-conductive material and said electrically conductive film (CF).

23. The bonded structure according to claim 22, wherein the frame further comprises at least one spacer which is disposed between said integrant of electrically non-conductive material and said electrically conductive film (CF), wherein said at least one spacer either interrupts the fixative film or is disposed at an end thereof.

24. A method of disbonding the electronics assembly as defined in any one of claims 1 to 19 or the bonded structure as defined in claims 21 to 23, the method comprising the steps of:
i) applying a voltage across both said electrically conductive exterior surface of said electronic component(s) and said electrically conductive surface of said wall or said frame to form an anodic interface and a cathodic interface; and,
ii) disbonding the surfaces.

25. The method according to the claim 24, wherein the voltage applied in step i) is from 0.5 to 100 V and it is preferably applied for a duration of from 1 second to 60 minutes.
